# EUROPEAN PATENT APPLICATION

(11) **EP 4 847 857 A1**
(43) Date of publication of application: **02.12.2026**
(21) Application number: 25758545.5
(22) Date of filing: 10.02.2025
(51) Int. Cl.: F25D 29/00, F25D 11/02, G06Q 50/10, G06N 20/00

(54) **REFRIGERATOR FOR PREDICTING TEMPERATURE OF COOLING COMPARTMENT AND CONTROL METHOD THEREOF**

(30) Priority: 21.02.2024 KR 20240025331
(71) Applicant: Samsung Electronics Co., Ltd., Suwon-si, Gyeonggi-do 16677 (KR)
(72) Inventor: LIM, Seonjae, Suwon-si, Gyeonggi-do 16677 (KR); KWON, Taejun, Suwon-si, Gyeonggi-do 16677 (KR); KIM, Sujin, Suwon-si, Gyeonggi-do 16677 (KR); SONG, Hoyoon, Suwon-si, Gyeonggi-do 16677 (KR); AHN, Sangwon, Suwon-si, Gyeonggi-do 16677 (KR); LEE, Bokyung, Suwon-si, Gyeonggi-do 16677 (KR); LEE, Yunwoo, Suwon-si, Gyeonggi-do 16677 (KR); JO, Eunae, Suwon-si, Gyeonggi-do 16677 (KR)
(74) Representative: Appleyard Lees IP LLP
(86) International application number: PCT/KR2025/001939
(87) International publication number: WO 2025/178299

(57) **Abstract**

Provided is a method for controlling a refrigerator. The method for controlling a refrigerator may comprise the steps of: measuring an internal temperature of a cooling compartment; acquiring first generation data indicating specific heat of the cooling compartment; acquiring second generation data indicating a user's usage pattern; and predicting the internal temperature of the cooling compartment after a reference time by using an artificial intelligence model for receiving input data including the measured internal temperature and outputting a predicted temperature, the first generation data, and the second generation data.

## Description

### Technical Field

According to embodiments of the present disclosure, there are provided a refrigerator for predicting a temperature of a cooling compartment, a method of controlling the refrigerator, and a computer-readable recording medium having recorded thereon a program for performing, on a computer, the method of controlling the refrigerator.

### BACKGROUND ART

A refrigerator may include various combinations of cooling compartments. For example, the refrigerator may include a refrigerating compartment and a freezing compartment. The refrigerator operates to maintain each cooling compartment at a target cooling temperature. The refrigerator may control the temperature of a cooling compartment by measuring and predicting the temperature of the cooling compartment. To predict the temperature of the cooling compartment, the measured temperature may be referred to. However, relying only on the measured temperature has limitations in predicting the temperature of the cooling compartment, and the accuracy of the temperature prediction may be insufficient.

### Disclosure of Invention

### Solution to Problem

According to an aspect of an embodiment of the present disclosure, a method of controlling a refrigerator is provided. The method of controlling the refrigerator may include measuring an internal temperature of a cooling compartment, obtaining first generated data representing a specific heat capacity of the cooling compartment, obtaining second generated data representing a usage pattern of a user, and predicting an internal temperature of the cooling compartment after a reference time by using an artificial intelligence (AI) model trained to receive input data including the measured internal temperature and output a predicted temperature, the first generated data, and the second generated data.

Furthermore, according to an aspect of an embodiment of the present disclosure, a refrigerator is provided. The refrigerator may include at least one cooling compartment, a cooling compartment temperature sensor configured to measure an internal temperature of the cooling compartment, memory storing at least one instruction, and at least one processor. The at least one processor may be configured to execute the at least one instruction to obtain first generated data representing a specific heat capacity of the cooling compartment, obtain second generated data representing a usage pattern of a user, and predict an internal temperature of the cooling compartment after a reference time by using an AI model trained to receive input data including the measured internal temperature and output a predicted temperature, the first generated data, and the second generated data.

Furthermore, according to an aspect of an embodiment of the present disclosure, there is provided a computer-readable recording medium having recorded thereon a program for performing, on a computer, a method of controlling a refrigerator.

### Brief Description of Drawings

FIG. 1 is a diagram illustrating a refrigerator and a method of controlling the refrigerator, according to an embodiment of the present disclosure.
FIG. 2 is a diagram illustrating a structure of a refrigerator according to an embodiment of the present disclosure.
FIG. 3 is a graph illustrating a measured internal temperature and a predicted internal temperature of a refrigerator, according to an embodiment of the present disclosure.
FIG. 4 is a diagram illustrating structures of cooling compartments and doors of a refrigerator and sensor data thereof, according to an embodiment of the present disclosure.
FIG. 5 is a diagram illustrating a method of controlling a refrigerator, according to an embodiment of the present disclosure.
FIG. 6 is a diagram illustrating a process of defining and updating first generated data, according to an embodiment of the present disclosure.
FIG. 7 is a diagram illustrating a process of obtaining second generated data, according to an embodiment of the present disclosure.
FIG. 8 is a diagram illustrating a process of defining and updating first sub-generated data of second generated data, according to an embodiment of the present disclosure.
FIG. 9 is a diagram illustrating a process of defining and updating second sub-generated data of second generated data, according to an embodiment of the present disclosure.
FIG. 10 is a diagram illustrating a process of defining third sub-generated data of second generated data, according to an embodiment of the present disclosure.
FIG. 11 is a diagram illustrating a process of updating first generated data or second generated data, according to an embodiment of the present disclosure.
FIG. 12 is a diagram illustrating a temperature prediction model according to an embodiment of the present disclosure.
FIG. 13 is a diagram illustrating a temperature prediction model according to an embodiment of the present disclosure.
FIG. 14 is a diagram illustrating a structure of a refrigerator according to an embodiment of the present disclosure.
FIG. 15 is a diagram illustrating a refrigerator, an external device, and a server, according to an embodiment of the present disclosure.
FIG. 16 is a diagram illustrating a process of outputting a high-load notification through an external device or a refrigerator, according to an embodiment of the present disclosure.
FIG. 17 is a diagram illustrating a process of outputting a high-load notification, according to an embodiment of the present disclosure.
FIG. 18 is a diagram illustrating a process of predicting an internal temperature of a refrigerator by using an artificial intelligence (AI) model provided in a server, according to an embodiment of the present disclosure.
FIG. 19 is a block diagram illustrating a structure of a refrigerator according to an embodiment of the present disclosure.

### Mode for the Invention

It should be understood that various embodiments of the present disclosure and terms used therein are not intended to limit the technical features described herein to particular embodiments and that the present disclosure includes various modifications, equivalents, or substitutions of the embodiments.

With regard to the description of the drawings, like reference numerals may be used to represent like or related elements.

A singular form of a noun corresponding to an item may include one or a plurality of the items unless the context clearly indicates otherwise.

As used herein, each of the phrases such as "A or B," "at least one of A and B, "at least one of A or B," "A, B, or C," "at least one of A, B, and C," and "at least one of A, B, or C" may include any one of the items listed together in a corresponding one of the phrases, or all possible combinations thereof.

The term "and/or" includes any combination of a plurality of associated elements listed, or any one of the plurality of associated listed elements.

Terms such as "first," "second," etc. may be used simply to distinguish an element from another element and do not limit the corresponding elements in any other respect (e.g., importance or order).

In addition, terms such as 'front', 'rear', 'top', 'bottom', 'side', 'left', 'right', 'upper', and 'lower' used in the present disclosure are defined based on the drawings, and the shape and position of each component are not limited by these terms.

Terms such as "comprise," "include," or "have" are intended to specify the presence of stated features, numbers, steps, operations, elements, components, or combinations thereof, but do not preclude the presence or addition of one or more other features, numbers, steps, operations, elements, components, or combinations thereof.

It will also be understood that when an element is referred to as being "connected," "coupled," "supported," or "in contact" with another element, this includes not only when the elements are directly connected, coupled, supported, or in contact, but also when they are indirectly connected, coupled, supported, or in contact via a third element.

It will also be understood that when an element is referred to as being "on" another element, the element may be directly on the other element, or intervening elements may also be present therebetween.

A refrigerator according to an embodiment may include a main body.

The "main body" may include an inner case, an outer case provided outside the inner case, and an insulation material provided between the inner case and the outer case.

The "inner case" may include at least one of a case, a plate, a panel, or a liner forming a storage compartment. The inner case may be formed as a single body, or may be formed by assembling a plurality of plates. The "outer case" may form the exterior of the main body and may be coupled to an outer side of the inner case so that the insulation material is provided between the inner case and the outer case.

The "insulation material" may insulate an inside of the storage compartment from an outside of the storage compartment so that a temperature inside the storage compartment may be maintained at a set appropriate temperature without being affected by an external environment of the storage compartment. According to an embodiment, the insulation material may include a foam insulation material. The foam insulation material may be molded by injecting and foaming a urethane foam in which polyurethane and a foaming agent are mixed between the inner case and the outer case.

According to an embodiment, the insulation material may include a vacuum insulation material in addition to the foam insulation material, or may include only the vacuum insulation material instead of the foam insulation material. The vacuum insulation material may include a core material and an envelope material that accommodates the core material and seals an interior thereof at a vacuum or near-vacuum pressure. However, the insulation material is not limited to the foam insulation material or vacuum insulation material and may include various materials that may be used for insulation.

The "storage compartment" may include a space defined by the inner case. The storage compartment may further include an inner structure defining the space corresponding to the storage compartment. Various items such as food, medicine, and cosmetics may be stored in the storage compartment, and the storage compartment may be formed such that at least one side thereof is open to allow the items to be stored therein or be retrieved therefrom.

The refrigerator may include one or more storage compartments. When two or more storage compartments are provided in the refrigerator, each of the storage compartments may have a different purpose and may be maintained at a different temperature. To this end, the respective storage compartments may be partitioned from each other by partition walls including insulation materials.

The storage compartment may be provided to be maintained in an appropriate temperature range according to its intended use, and include a "refrigerating compartment", a "freezing compartment", or a "variable temperature compartment" distinguished according to their use and/or temperature range. The refrigerating compartment may be maintained at a temperature appropriate for refrigerated storage of items, and the freezing compartment may be maintained at a temperature appropriate for frozen storage of items. "Refrigeration" may mean cooling an item to the extent where the item does not freeze, and for example, the refrigerating compartment may be maintained in a range of 0 °C to 7 °C. "Freezing" may mean cooling an item to freeze the item or to maintain it in a frozen state, and for example, the freezing compartment may be maintained in a range of -20 °C to -1 °C. The variable temperature compartment may be used as either the refrigerating compartment or the freezing compartment according to or regardless of a user's selection.

In addition to the names such as "refrigerating compartment", "freezing compartment", and "variable temperature compartment", the storage compartment may be referred to by various other names, such as a "vegetable compartment", a "fresh food compartment", a "cooling compartment", and an "ice-making compartment", and the terms such as "refrigerating compartment", "freezing compartment", and "variable temperature compartment" used hereinafter should be understood to encompass storage compartments respectively having corresponding purposes and temperature ranges.

According to an embodiment, the refrigerator may include at least one door configured to open and close one open side of the storage compartment. The door may be provided to open and close each of one or more storage compartments, or one door may be provided to open and close a plurality of storage compartments. The door may be rotatably or slidably installed on a front surface of the main body.

The "door" may be configured to seal the storage compartment when the door is closed. Like the main body, the door may include an insulation material to insulate the storage compartment when the door is closed.

According to an embodiment, the door may include a door outer plate forming a front surface of the door, a door inner plate forming a rear surface of the door and facing the storage compartment, an upper cap, a lower cap, and a door insulation material provided therein.

A gasket may be provided at an edge of the door inner plate and seal the storage compartment by tightly contacting the front surface of the main body when the door is closed. The door inner plate may include a dyke protruding backward such that a door basket capable of storing items is mounted thereto.

According to an embodiment, the door may include a door body and a front panel detachably coupled to a front side of the door body and forming the front surface of the door. The door body may include a door outer plate forming a front surface of the door body, a door inner plate forming a rear surface of the door body and facing the storage compartment, an upper cap, a lower cap, and a door insulation material provided therein.

The refrigerator may be classified into a French door type, a side-by-side type, a bottom mounted freezer (BMF) refrigerator, a top mounted freezer (TMF) refrigerator, a one-door refrigerator, or the like according to arrangement of the door and the storage compartment.

According to an embodiment, the refrigerator may include a cold air supply device provided to supply cold air to the storage compartment.

The "cold air supply device" may include a machine, an apparatus, an electronic device, and/or a system that is a combination thereof, which are capable of generating cold air and guiding the cold air to cool the storage compartment.

According to an embodiment, the cold air supply device may generate cold air through a refrigeration cycle including compression, condensation, expansion, and evaporation of a refrigerant. To this end, the cold air supply device may include a refrigeration cycle system having a compressor, a condenser, an expansion device, and an evaporator capable of driving a refrigeration cycle. According to an embodiment, the cold air supply device may include a semiconductor such as a thermoelectric element. The thermoelectric element may cool the storage compartment through heating and cooling actions based the Peltier effect.

According to an embodiment, the refrigerator may include a machine room in which at least some components of the cold air supply device are arranged.

The "machine room" may be partitioned and insulated from the storage compartment to prevent heat generated in components arranged in the machine room from being transferred to the storage compartment. The inside of the machine room may be configured to communicate with the outside of the main body so as to dissipate heat from the components inside the machine room.

According to an embodiment, the refrigerator may include a dispenser provided on the door to provide water and/or ice. The dispenser may be provided on the door such that the user may access the dispenser without opening the door.

According to an embodiment, the refrigerator may include an ice-making device provided to generate ice. The ice-making device may include an ice-making tray for storing water, an ice-ejecting device for separating ice from the ice-making tray, and an ice bucket for storing ice generated in the ice-making tray.

According to an embodiment, the refrigerator may include a controller for controlling the refrigerator.

The "controller" may include memory for storing or retaining programs and/or data used to control the refrigerator and a processor for outputting control signals for controlling the cold air supply device and the like according to the programs and/or data stored in the memory.

The memory stores or records various pieces of information, data, instructions, programs, etc. necessary for the operation of the refrigerator. The memory may store temporary data generated while generating control signals for controlling components included in the refrigerator. The memory may include at least one of volatile memory or non-volatile memory, or a combination thereof.

The processor controls all operations of the refrigerator. The processor may execute a program stored in the memory to control components of the refrigerator. The processor may include a separate neural processing unit (NPU) that performs an operation of an artificial intelligence (AI) model. The processor may also include a central processing unit (CPU), a dedicated graphics processor (a graphics processing unit (GPU)), etc. The processor may generate a control signal for controlling an operation of the cool air supply device. For example, the processor may receive temperature information of the storage compartment from a temperature sensor and generate a cooling control signal for controlling the operation of the cold air supply device based on the temperature information of the storage compartment.

In addition, the processor may process a user input received from a user interface and control an operation of the user interface according to programs and/or data retained/stored in the memory. The user interface may be provided using an input interface and an output interface. The processor may receive a user input from the user interface. The processor may also transmit, to the user interface, a display control signal and image data for displaying an image on the user interface in response to a user input.

The processor may be provided integrally with or separately from the memory. The processor may include one or more processors. For example, the processor may include a main processor and at least one sub-processor. The memory may include one or more memories.

According to an embodiment, the refrigerator may include the memory and the processor for collectively controlling all components included in the refrigerator, or include a plurality of memories and a plurality of processors for individually controlling the components of the refrigerator. For example, the refrigerator may include the memory and the processor for controlling the operation of the cold air supply device according to an output of the temperature sensor. In addition, the refrigerator may separately include the memory and the processor for controlling operation of the user interface according to a user input.

A communication module may communicate with an external device such as a server, a mobile device, or another home appliance via a nearby access point (AP). The AP may connect a local area network (LAN) to which the refrigerator or a user device is connected to a wide area network (WAN) to which a server is connected. The refrigerator or user device may be connected to the server via the WAN.

The input interface may include a key, a touch screen, a microphone, etc. The input interface may receive a user input and transmit the user input to the processor.

The output interface may include a display, a speaker, etc. The output interface may output various notifications, messages, information, etc., generated by the processor.

According to an embodiment of the present disclosure, there are provided a refrigerator and a method of controlling the refrigerator, which are capable of accurately predicting an internal temperature of the refrigerator by reflecting a specific heat capacity of the refrigerator and a usage pattern of a user.

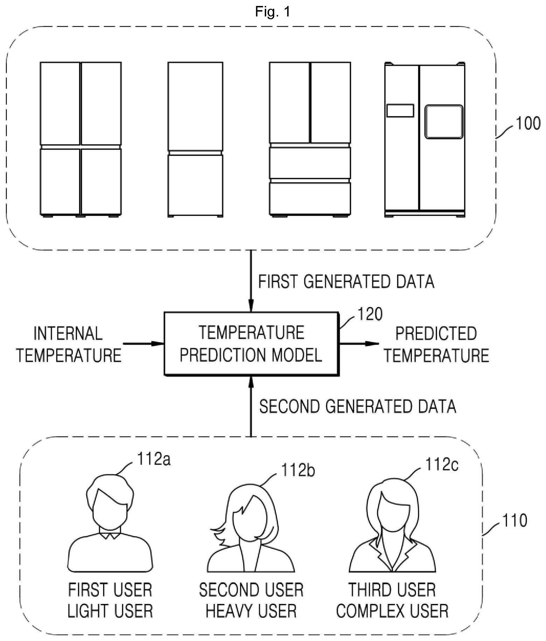

FIG. 1 is a diagram illustrating a refrigerator and a method of controlling the refrigerator, according to an embodiment of the present disclosure.

According to an embodiment of the present disclosure, there are provided a refrigerator and a method for predicting a temperature of a cooling compartment of a refrigerator 100 after a reference time by using first generated data representing characteristics related to the refrigerator 100, second generated data representing characteristics related to a usage pattern 110 of a user, and a measured internal temperature.

The refrigerator 100 may have various characteristics for each product. The volume and size of the refrigerator 100 vary depending on a model. In addition, combinations of cooling compartments may vary, and a size of each of the cooling compartments may differ. In addition, the number of doors on the refrigerator 100 may vary depending on a model.

For example, the refrigerator 100 may be provided with various numbers of doors. The doors may be arranged as, for example, one, two, three, or four doors. In addition, for example, the refrigerator 100 may be provided with various types and numbers of cooling compartments. The refrigerator 100 may have a plurality of cooling compartments with different target cooling temperatures. The cooling compartment may include a refrigerating compartment, a freezing compartment, a variable temperature compartment, etc. In addition, the cooling compartments and the doors of the refrigerator 100 may be arranged in various manners. For example, one or two doors may be arranged for one cooling compartment. Furthermore, for example, the cooling compartment may be arranged in a drawer type. In addition, for example, a plurality of cooling compartments may be arranged vertically or horizontally. As described above, because the refrigerator 100 may have various structures for each product, cooling characteristics of each refrigerator 100 differ, and cooling characteristics of each cooling compartment differ. In addition, a specific heat capacity of a cooling compartment of the refrigerator 100 may vary depending on characteristics of the corresponding refrigerator 100 and the corresponding cooling compartment. According to an embodiment of the present disclosure, the first generated data, which is data related to a specific heat capacity of each cooling compartment, may be defined, and an internal temperature of the cooling compartment may be predicted using the first generated data.

Moreover, the internal temperature of the cooling compartment of the refrigerator 100 may vary according to the usage pattern 110 of the user. For example, a first user 112a may correspond to a user who uses the refrigerator 100 relatively infrequently. The first user 112a may open and close a door of the refrigerator 100 relatively infrequently and may not store hot food in the cooling compartment. Furthermore, for example, a second user 112b may correspond to a user who uses the refrigerator 100 relatively frequently. The second user 112b may open and close the door of the refrigerator 100 relatively often and may frequently use a cooling function. Furthermore, for example, a third user 112c may use a variable temperature compartment of the refrigerator 100 as a kimchi refrigerator and may not frequently open the refrigerator 100. As described above, usage patterns of the refrigerator 100 differ depending on the user, and the usage pattern 110 of the user affects a temperature change of the cooling compartment of the refrigerator 100. According to an embodiment of the present disclosure, the second generated data representing the usage pattern 110 of the user may be defined, and the internal temperature of the cooling compartment may be predicted using the second generated data.

In addition, the refrigerator 100 may measure the internal temperature of the cooling compartment by using a temperature sensor that measures a temperature inside the cooling compartment.

The refrigerator 100 may predict the internal temperature after a reference time by inputting the first generated data, the second generated data, and the internal temperature to a temperature prediction model 120. The temperature prediction model 120 may predict the internal temperature by using an AI model. The temperature prediction model 120 may receive the internal temperature, the first generated data, and the second generated data as inputs, and may predict the internal temperature by performing processing using the AI model and predetermined preprocessing or postprocessing.

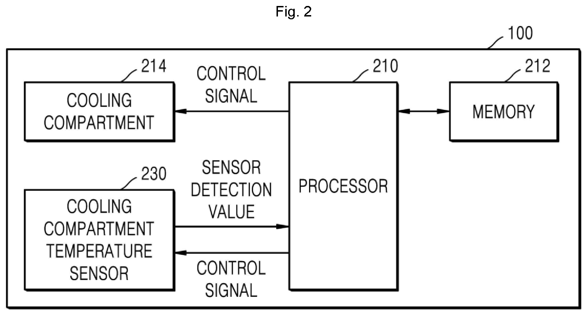

FIG. 2 is a diagram illustrating a structure of a refrigerator according to an embodiment of the present disclosure.

According to an embodiment of the present disclosure, the refrigerator 100 is provided in a form that allows storage of food in a cooling compartment maintained at a target cooling temperature. The refrigerator 100 may have various cooling compartment arrangements and door arrangements. In addition, the refrigerator 100 may be provided in various forms, such as a built-in type or a freestanding type.

According to an embodiment of the present disclosure, the refrigerator 100 may include a processor 210, a memory 212, a cooling compartment 214, and a cooling compartment temperature sensor 216.

The processor 210 controls all operations of the refrigerator 100. The processor 210 may be implemented as one or more processors. The processor 210 may execute instructions or commands stored in the memory 212 to perform predetermined functions. Furthermore, the processor 210 controls operations of components included in the refrigerator 100.

The processor 210 is a component that controls a series of processes such that the refrigerator 100 operates according to embodiments described below, and may include one or a plurality of processors. The one or plurality of processors included in the processor 210 may be circuitry such as a system on chip (SoC) or an integrated circuit (IC). The one or plurality of processors included in the processor 210 may be general-purpose processors such as a CPU, a microprocessor unit (MPU), an application processor, or a digital signal processor (DSP), dedicated graphics processors such as a GPU or a vision processing unit (VPU), dedicated AI processors such as a neural processing unit (NPU), or dedicated communication processors such as a communication processor (CP). When the one or the plurality of processors included in the processor 210 are dedicated AI processors, the dedicated AI processors may be designed with a hardware structure specialized for processing a particular AI model.

The processor 210 may write data to the memory 212 or read data stored in the memory 212, and in particular, execute a program or at least one instruction stored in the memory 212 to process data according to predefined operation rules or AI models. Accordingly, the processor 212 may perform operations described in embodiments below, and operations described in the embodiments below as being performed by the refrigerator 100 or detailed components included in the refrigerator 100 may be understood as being performed by the processor 210, unless otherwise specified.

The memory 212 is a component for storing various programs or data, and may include a storage medium, such as read-only memory (ROM), random access memory (RAM), a hard disk, compact disk ROM (CD-ROM), and a digital versatile disk (DVD), or a combination of storage media. The memory 212 may not exist separately, but may be configured to be included in the processor 210. The memory 212 may consist of volatile memory, non-volatile memory, or a combination of volatile memory and non-volatile memory. The memory 212 may store a program or at least one instruction for performing operations according to embodiments described below. The memory 212 may provide stored data to the processor 210 according to a request from the processor 210.

The cooling compartment 214 is a storage compartment maintained within an appropriate temperature range according to its intended use. The cooling compartment 214 may include, for example, a refrigerating compartment, a freezing compartment, a variable temperature compartment, a kimchi storage compartment, etc. The variable temperature compartment may be set as the refrigerating compartment, the freezing compartment, or the kimchi storage compartment according to a user's setting. In addition, a target cooling temperature of the variable temperature compartment may be variously set according to a user's setting. The cooling compartment 214 may receive cold air from a cold air supply device of the refrigerator 100 and may be maintained at the target cooling temperature. The refrigerator 100 may include one or more cooling compartments 214. Types and combinations of the cooling compartments 214 may be variously determined. For example, the cooling compartment 214 may include one refrigerating compartment, one freezing compartment, and one variable temperature compartment. Additionally, for example, the cooling compartment 214 may include one refrigerating compartment and one freezing compartment.

The cooling compartment 214 may be opened or sealed by a door. Each cooling compartment 214 may be provided with one or more doors. For example, the cooling compartment 214 may be provided with a single door, or may be provided with two side-by-side doors. In addition, the cooling compartment 214 may be arranged in a drawer type. In the case of the drawer-type cooling compartment 214, the cooling compartment 214 may be opened by opening a drawer and sealed by closing the drawer.

The cooling compartment temperature sensor 216 measures a temperature inside the cooling compartment 214. When the refrigerator 100 includes a plurality of cooling compartments 214, the cooling compartment temperature sensor 216 may be individually arranged in each of the cooling compartments 214. In addition, one or more cooling compartment temperature sensors 216 may be arranged in one cooling compartment 214. The cooling compartment temperature sensor 216 measures an internal temperature of the cooling compartment 214 in which the corresponding cooling compartment temperature sensor 216 is located. Furthermore, the cooling compartment temperature sensor 216 transmits the measured internal temperature to the processor 210.

The processor 210 obtains first generated data representing a specific heat capacity of the cooling compartment and second generated data representing a usage pattern of a user. A process of obtaining the first generated data and the second generated data is described in detail below.

The processor 210 predicts an internal temperature of the cooling compartment 214 after a reference time by using the measured internal temperature of the cooling compartment 214, the first generated data, and the second generated data. The reference time may be variously determined as, for example, 10 seconds, 30 seconds, 1 minute, 5 minutes, or the like. The processor 210 may predict the internal temperature of the cooling compartment 214 by using an AI model. According to an embodiment of the present disclosure, the processor 210 inputs the internal temperature, the first generated data, and the second generated data to the AI model, and the AI model may output a predicted temperature after the reference time. In addition, according to an embodiment of the present disclosure, the processor 210 may obtain a model prediction value by inputting the internal temperature to the AI model, and then postprocess the model prediction value by using the first generated data and the second generated data to obtain a predicted temperature, which is a predicted value of the internal temperature. A method of predicting the internal temperature by using the AI model and the postprocessing is described in detail below.

The processor 210 may measure an internal temperature at predetermined time intervals, and periodically predict an internal temperature by using the measured internal temperature. For example, the processor 210 may measure an internal temperature at intervals of 1 second, 5 seconds, or the like, and predict an internal temperature.

In addition, according to an embodiment of the present disclosure, the processor 210 may calculate an average value of measured internal temperatures during a reference time, and use the average value as an internal temperature measurement value. In order to filter out a temporary temperature change of the cooling compartment 214, the refrigerator 100 may predict an internal temperature by using the average value of the internal temperature measurements during the reference time. For example, the processor 210 may predict an internal temperature by using an average value of the internal temperature measurements for the last 5 minutes.

Next, the first generated data and the second generated data are described.

The first generated data is data representing a specific heat capacity of each cooling compartment 214. The first generated data represents a load when the cooling compartment 214 is cooled. The refrigerator 100 includes a cold air supply device (not shown), and may supply cold air from the cold air supply device to the cooling compartment 214. Each cooling compartment 214 has a predetermined target cooling temperature. When the internal temperature of the cooling compartment 214 increases above the target cooling temperature by at least a reference temperature, the processor 210 may drive the cold air supply device to cool the cooling compartment 214 to the target cooling temperature. While monitoring the internal temperature of the cooling compartment 214 by using the cooling compartment temperature sensor 216 of the cooling compartment 214, the processor 210 controls the cold air supply device to supply cold air to the cooling compartment 214 until the internal temperature of the cooling compartment 214 reaches the target cooling temperature. In this manner, an operation in which the cold air supply device supplies cold air to the cooling compartment 214 is referred to as a cooling operation. However, after the cooling operation, a temperature change trend of the cooling compartment 214 may vary according to a specific heat capacity of each cooling compartment 214. When the specific heat capacity of the cooling compartment 214 is high, the internal temperature increases at a relatively fast rate after the cooling compartment 214 is cooled. When the specific heat capacity of the cooling compartment 214 is low, the internal temperature increases at a relatively slow rate after the cooling compartment 214 is cooled. The first generated data reflects such a difference in specific heat capacity of each cooling compartment 214.

The specific heat capacity of the cooling compartment 214 may vary according to various factors, such as material characteristics, a structure, a food storage amount, a food type, and a food arrangement of the cooling compartment 214. According to an embodiment of the present disclosure, during operation of the refrigerator 100, the first generated data is defined and updated to reflect the specific heat capacity of the cooling compartment 214 in the first generated data, and the first generated data is updated by using a change in the specific heat capacity of the cooling compartment 214. Accordingly, by predicting the internal temperature of the cooling compartment 214 by reflecting the specific heat capacity of the cooling compartment 214, which significantly affects the temperature change of the cooling compartment 214, the accuracy of prediction of the internal temperature of the cooling compartment 214 may be significantly improved.

During a cooling operation for supplying cold air to the cooling compartment 214, the processor 210 obtains a previous cooling end time T11, a current cooling start time T12, a temperature sensor value F11 at the end of the previous cooling, and a temperature sensor value F12 at the start of the current cooling. The first generated data may be defined as shown in Equation 1. $First Generated Data = \frac{F 12 - F 11}{T 12 - T 11}$ Equation 1

When the performance of the cold air supply device is the same, the first generated data is a rate of temperature change per unit time, and thus a magnitude of the first generated data reflects a degree of load of the refrigerator 100. For example, it is assumed that there are a first refrigerator and a second refrigerator having the same size and model of the refrigerator 100. **It** is assumed that the first refrigerator is half filled with items, and the second refrigerator is completely filled with items. **It** is assumed that the previous cooling end times are the same, and that internal temperatures at the end of the previous cooling are 0°C for both the first refrigerator and the second refrigerator. Assuming that the reference temperature at which cooling of the cooling compartment 214 is required is 5 °C, a time taken for the first refrigerator to reach the reference temperature may be 1 hour, and a time taken for the second refrigerator to reach the reference temperature may be 30 minutes. In other words, because a load of the second refrigerator is greater than a load of the first refrigerator, a magnitude of the first generated data for the second refrigerator may be twice that of the first generated data for the first refrigerator.

The second generated data is data representing a usage pattern of a user. According to an embodiment of the present disclosure, the refrigerator 100 may generate the second generated data by calculating a rate of temperature change for each user action. User actions include an operation of opening and closing a door of the cooling compartment 214 and an operation of putting in or taking out food. The more frequently the user opens and closes the door, the greater the load on the cooling compartment 214 caused by the user action. Conversely, the less frequently the user opens and closes the door, the smaller the load on the cooling compartment 214. In addition, when the user puts a hot object into the cooling compartment 214, the load on the cooling compartment 214 increases. In this manner, the load on the cooling compartment 214 may vary depending on the user action. The second generated data reflects the load on the cooling compartment 214 caused by such user actions.

The second generated data may include at least one of first sub-generated data, second sub-generated data, or third sub-generated data.

The first sub-generated data is data reflecting a user action. The first sub-generated data may be calculated using a user action measurement start time T21, a user action measurement end time T22, a door opening time T23, a door closing time T24, an internal temperature F21 at the time of door opening, and an internal temperature F22 at the time of door closing. According to an embodiment of the present disclosure, in order to reflect that it takes time for a temperature change caused by door opening and closing to be fully reflected in the internal temperature, the internal temperature F22 at the time of door closing may be determined using a sensor detection value of the cooling compartment temperature sensor 216 obtained after a delay time has elapsed from the time of door closing. For example, the refrigerator 100 may use a sensor detection value of the cooling compartment temperature sensor 216 obtained 5 minutes after the time of door closing as the internal temperature F22 at the time of door closing. An interval between the user action measurement start time T21 and the user action measurement end time T22 may be preset. For example, a duration of a user action measurement period between the start of user action measurement and the end of user action measurement may be set to 1 minute. That is, a time difference between the user action measurement start time T21 and the user action measurement end time T22 may be set to 1 minute.

The first sub-generated data may be defined as shown in Equation 2.$First Sub - generated Data = \frac{\left(T24-T23\right) \times \left(F22-F21\right)}{T 22 - T 21}$ Equation 2

The processor 210 may generate the first sub-generated data for each preset user action period. For example, the processor 210 may generate the first sub-generated data at intervals of 1 minute. When opening of the door or closing of the door is detected by using a sensor detection value of a door sensor (not shown) that detects opening and closing of the door, the processor 210 may obtain a door opening time T23, a door closing time T24, an internal temperature F21 at the time of door opening, and an internal temperature F22 at the time of door closing. The processor 210 may define a time at which the door is opened as the door opening time T23, and define a time at which the door is closed as the door closing time T24. In addition, the processor 210 may define a sensor detection value of the cooling compartment temperature sensor 216 at the time of door opening as the internal temperature F21 at the time of door opening, and define, as the internal temperature F22 at the time of door closing, a sensor detection value of the cooling compartment temperature sensor 216 at the time of door closing or a sensor detection value of the cooling compartment temperature sensor 216 obtained after a delay time has elapsed from the time of door closing. The processor 210 may calculate the first sub-generated data by using the obtained door opening time T23, door closing time T24, internal temperature F21 at the time of door opening, and internal temperature F22 at the time of door closing.

The second sub-generated data is data reflecting a user action and an ambient temperature. The second sub-generated data may be calculated using a user action measurement start time T21, a user action measurement end time T22, a door opening time T23, a door closing time T24, an internal temperature F21 at the time of door opening, an internal temperature F22 at the time of door closing, and an ambient temperature F23. According to an embodiment of the present disclosure, in order to reflect that it takes time for a temperature change caused by door opening and closing to be fully reflected in the internal temperature, the internal temperature F22 at door closing may be determined using a sensor detection value of the cooling compartment temperature sensor 216 obtained after a delay time has elapsed from the time of door closing. For example, the refrigerator 100 may use a sensor detection value of the cooling compartment temperature sensor 216 obtained 5 minutes after the time of door closing as the internal temperature F22 at door closing. An interval between the user action measurement start time T21 and the user action measurement end time T22 may be preset. For example, a duration of a user action measurement period between the start of user action measurement and the end of user action measurement may be set to 1 minute. That is, a time difference between the user action measurement start time T21 and the user action measurement end time T22 may be set to 1 minute.

The refrigerator 100 may include an ambident temperature sensor (not shown) that measures a temperature outside the cooling compartment 214. The refrigerator 100 may measure the ambident temperature F23 by using a sensor detection value of the ambient temperature sensor.

The second sub-generated data may be defined as shown in Equation 3.$Second Sub - generated Data = \frac{\left(T24-T23\right) \times \left(F22-F21\right)}{T 22 - T 21} \times F 23$ Equation 3

The processor 210 may generate the second sub-generated data for each preset user action period. For example, the processor 210 may generate the second sub-generated data at intervals of 1 minute. When opening of the door or closing of the door is detected by using a sensor detection value of a door sensor (not shown) that detects opening and closing of the door, the processor 210 may obtain a door opening time T23, a door closing time T24, an internal temperature F21 at the time of door opening, an internal temperature F22 at the time of door closing, and an ambient temperature F23. The processor 210 may define a sensor detection value of the ambient temperature sensor at a predetermined time point as the ambient temperature F23. For example, the processor 210 may define a sensor detection value of the ambient temperature sensor at the time of door opening as the ambient temperature F23. Furthermore, for example, the processor 210 may define an average value of ambient temperature sensor values during a door opening period as the ambient temperature F23. In addition, for example, the processor 210 may define an ambient temperature sensor value at the time of door closing as the ambient temperature F23. The processor 210 may calculate the second sub-generated data by using the obtained door opening time T23, door closing time T24, internal temperature F21 at the time of door opening, internal temperature F22 at the time of door closing, and the ambient temperature F23.

The second sub-generated data may reflect a load on the cooling compartment 214 caused by ambient air when the door is opened. When the user keeps the door open for a long period of time, a change in the load on the cooling compartment 214 caused by the ambient air is large, and the second sub-generated data may reflect the load on the cooling compartment 214 caused by the ambient air.

The third sub-generated data is data reflecting a long-term user action. The third sub-generated data may be calculated using a user action measurement start time T21, a user action measurement end time T22, a door opening time T23, a door closing time T24, an internal temperature F21 at the time of door opening, and an internal temperature F22 at the time of door closing. According to an embodiment of the present disclosure, in order to reflect that it takes time for a temperature change caused by door opening and closing to be fully reflected in the internal temperature, the internal temperature F22 at door closing may be determined using a sensor detection value of the cooling compartment temperature sensor 216 obtained after a delay time has elapsed from the time of door closing. For example, the refrigerator 100 may use a sensor detection value of the cooling compartment temperature sensor 216 obtained 5 minutes after the time of door closing as the internal temperature F22 at the time of door closing. An interval between the user action measurement start time T21 and the user action measurement end time T22 may be preset. For example, a duration of a user action measurement period between the start of user action measurement and the end of user action measurement may be preset to 1 week, 2 weeks, 1 month, several months, 1 year, or the like. That is, a time difference between the user action measurement start time T21 and the user action measurement end time T22 may be set to a long period of time. The refrigerator 100 may collect the door opening time T23, the door closing time T24, the internal temperature F21 at the time of door opening, and the internal temperature F22 at the time of door closing over a long period of time, and may cumulatively sum a value of (T24-T23) × (F22-F21) for each door opening event. In addition, the refrigerator 100 may calculate the third sub-generated data by dividing the cumulative sum of the values of (T24-T23) × (F22-F21) by a duration (T22-T21) of the user action measurement period.

The third sub-generated data may be defined as shown in Equation 4.$Third Sub - generated Data = \frac{\sum \left(T24-T23\right) \times \left(F22-F21\right)}{T 22 - T 21}$ Equation 4

The processor 210 may generate the third sub-generated data for each preset user action measurement period. For example, the processor 210 may generate the third sub-generated data at intervals of one month. When opening of the door or closing of the door is detected by using a sensor detection value of a door sensor (not shown) that detects opening and closing of the door, the processor 210 may obtain a door opening time T23, a door closing time T24, an internal temperature F21 at the time of door opening, and an internal temperature F22 at the time of door closing. The processor 210 may calculate the third sub-generated data by accumulating the obtained door opening time T23, door closing time T24, internal temperature F21 at the time of door opening, and internal temperature F22 at the time of door closing during the user action measurement period.

According to an embodiment of the present disclosure, in an initial stage after installation of the refrigerator 100, initial values for the first generated data, the first sub-generated data, the second sub-generated data, and the third sub-generated data may be used, and after sensor detection values are collected from the cooling compartment temperature sensor 216 and the ambient temperature sensor for a predetermined period of time, the first generated data, the first sub-generated data, the second sub-generated data, and the third sub-generated data may be calculated and defined. Time points at which the first generated data, the first sub-generated data, the second sub-generated data, and the third sub-generated data are defined may be set differently from one another. For example, the first generated data, the first sub-generated data, and the second sub-generated data may begin to be calculated 1 day after product installation, and the third sub-generated data may begin to be calculated 1 month after product installation.

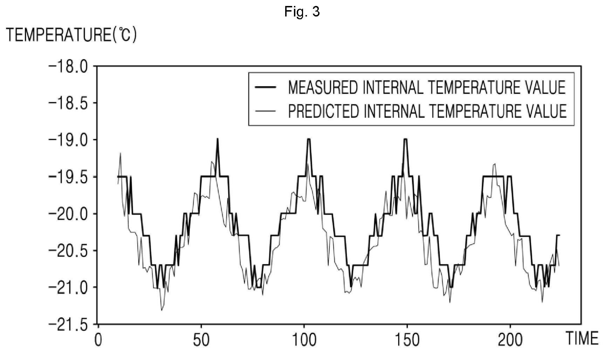

FIG. 3 is a graph illustrating a measured internal temperature and a predicted internal temperature of a refrigerator, according to an embodiment of the present disclosure.

According to an embodiment of the present disclosure, an internal temperature of the cooling compartment 214 may be predicted as shown in FIG. 3. The graph of FIG. 3 shows results of monitoring and predicting the temperature of a freezing compartment. As shown in the graph of FIG. 3, the refrigerator 100 may generate measured internal temperature values over time, and predict the internal temperature by using the internal temperature measurement values to generate predicted internal temperature values.

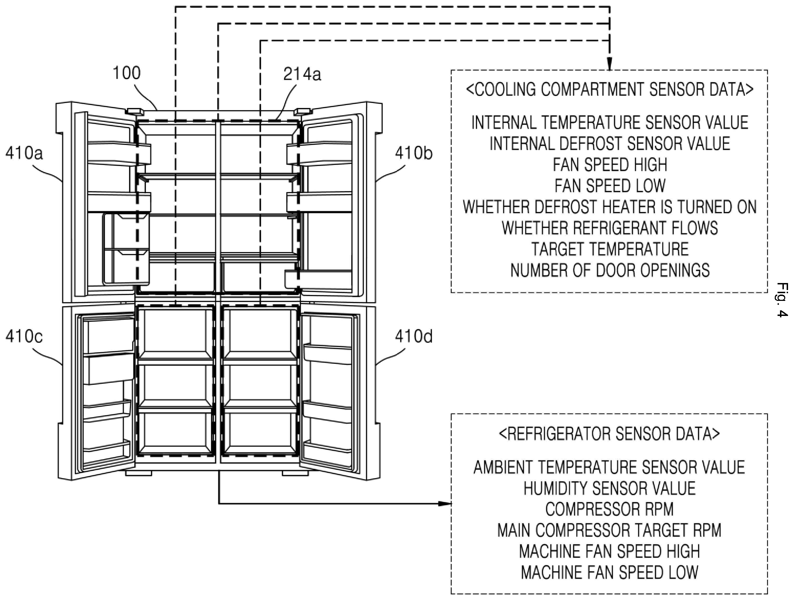

FIG. 4 is a diagram illustrating structures of cooling compartments and doors of a refrigerator and sensor data, according to an embodiment of the present disclosure.

According to an embodiment of the present disclosure, the refrigerator 100 may include a plurality of cooling compartments 214a, 214b, and 214c and a plurality of doors 420a, 420b, 420c, and 420d. Each of the cooling compartments 214a, 214b, and 214c may be provided to be maintained in an appropriate temperature range according to its intended use. The cooling compartments 214a, 214b, and 214c may include at least one of a refrigerating compartment, a freezing compartment, or a variable temperature compartment distinguished according to their use and/or temperature range. For example, the first cooling compartment 214a may be a refrigerating compartment, the second cooling compartment 214b may be a freezing compartment, and the third cooling compartment 214c may be a variable temperature compartment. The refrigerating compartment may be maintained at a temperature appropriate for refrigerated storage of food. The freezing compartment may be maintained at a temperature appropriate for frozen storage of food. "Refrigeration" may refer to cooling food to the extent where the food does not freeze, and for example, the refrigerating compartment may be maintained in a range of 0 °C to 7 °C. "Freezing" may refer to cooling food to freeze the food or to maintain it in a frozen state, and for example, the freezing compartment may be maintained in a range of -20 °C to -1 °C. The variable temperature compartment may be used as either the refrigerating compartment or the freezing compartment according to or regardless of a user's selection.

In addition to the names such as refrigerating compartment, freezing compartment, and variable temperature compartment, the cooling compartments 214a, 214b, and 214c may be referred to by various other names, such as a kimchi storage compartment, a vegetable compartment, a fresh food compartment, a cooling room, and an ice-making compartment, and the terms such as refrigerating compartment, freezing compartment, and variable temperature compartment should be understood to encompass the cooling compartments 214 respectively having corresponding purposes and temperature ranges.

Each of the cooling compartments 214a, 214b, and 214c may be opened or closed by at least one door. Each of the cooling compartments 214a, 214b, and 214c may be opened and closed by one or two doors. For example, the first cooling compartment 214a may be opened and closed by the two doors 410a and 410b, the second cooling compartment 214b may be opened and closed by the one door 410c, and the third cooling compartment 214c may be opened and closed by the one door 410d.

The refrigerator 100 may obtain cooling compartment sensor data for each of the cooling compartments 214a, 214b, and 214c. The cooling compartment sensor data may be individually measured and generated for each of the cooling compartments 214a, 214b, and 214c. The cooling compartment sensor data may include at least one of an internal temperature sensor value, an internal defrost sensor value, a fan speed high value, a fan speed low value, whether a defrost heater is turned on, whether refrigerant flows, a target temperature, or the number of door openings. The internal temperature sensor value is a sensor value detected by the cooling compartment temperature sensor 216 arranged in each of the cooling compartments 214a, 214b, and 214c. The internal defrost sensor value is a sensor value detected by a defrost sensor arranged in each of the cooling compartments 214a, 214b, and 214c. The fan speed high value and the fan speed low value respectively indicate a high value and a low value of a speed of a fan provided in each of the cooling compartments 214a, 214b, and 214c. Whether a defrost heater is turned on indicates whether the defrost heater of each of the cooling compartments 214a, 214b, and 214c is turned on. Whether refrigerant flows indicates whether refrigerant flows through a heat exchanger of each of the cooling compartments 214a, 214b, and 214c. The target temperature indicates a target cooling temperature of each of the cooling compartments 214a, 214b, and 214c. The number of openings refers to the number of times a door of each of the cooling compartments 214a, 214b, and 214c is opened during a reference time.

In addition, the refrigerator 100 may obtain refrigerator sensor data for the entire refrigerator 100. The refrigerator sensor data may be commonly applied to the cooling compartments 214a, 214b, and 214c. The refrigerator sensor data may include at least one of an ambient temperature sensor value, a humidity sensor value, a compressor revolutions per minute (RPM) value, a main compressor target RPM value, a machine room fan speed high value, or a machine room fan speed low value. The ambient temperature sensor value indicates a sensor detection value of the ambient temperature sensor of the refrigerator 100. The humidity sensor value indicates a sensor detection value of a humidity sensor. The compressor RPM value indicates an RPM of a compressor of a cold air supply device of the refrigerator 100. The main compressor target RPM value indicates a target RPM of the compressor of the cold air supply device of the refrigerator 100. The machine room fan speed high value and the machine room fan speed low value respectively indicate a high value and a low value of a speed of a fan provided in a machine room.

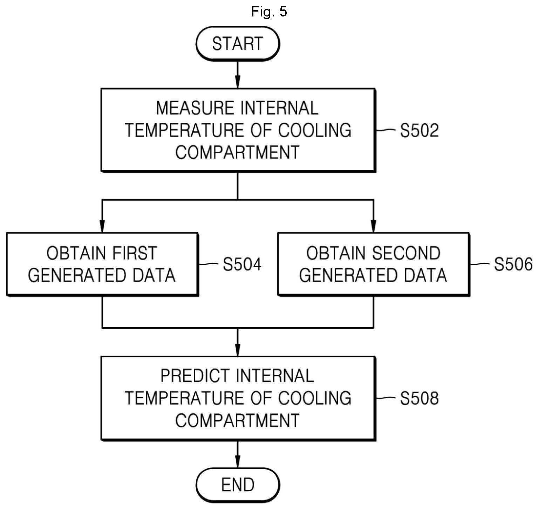

FIG. 5 is a diagram illustrating a method of controlling a refrigerator, according to an embodiment of the present disclosure.

Each operation of a method of controlling a refrigerator according to an embodiment of the present disclosure may be performed by various types of refrigerators. In the present disclosure, an embodiment in which the refrigerator 100 according to embodiments of the present disclosure performs the method of controlling the refrigerator is mainly described. Accordingly, the embodiments described with respect to the refrigerator 100 are applicable to embodiments of the method of controlling the refrigerator, and conversely, the embodiments described with respect to the method of controlling the refrigerator are applicable to embodiments of the refrigerator 100. The method of controlling the refrigerator according to the disclosed embodiments is not limited to an embodiment in which the method is performed by the refrigerator 100 disclosed in the present disclosure, and may be performed by various types of refrigerators.

In operation S502, the refrigerator 100 measures an internal temperature of the cooling compartment 214. The refrigerator 100 may measure the internal temperature by obtaining a sensor detection value from the cooling compartment temperature sensor 216 that measures a temperature inside the cooling compartment 214.

Next, in operation S504, the refrigerator 100 obtains first generated data. As described above, during a cooling operation for supplying cold air to the cooling compartment 214, the refrigerator 100 may obtain a previous cooling end time T11, a current cooling start time T12, a temperature sensor value F11 at the end of the previous cooling, and a temperature sensor value F12 at the start of the current cooling, and obtain the first generated data. During the cooling operation for cooling the cooling compartment 214, the refrigerator 100 may measure a value of internal temperature change of the cooling compartment 214 between a previous cooling end time and a current cooling start time. The refrigerator 100 may define, as the first generated data, a value obtained by dividing the value of the internal temperature change by a time difference between the previous cooling end time and the current cooling start time.

Furthermore, in operation S504, the refrigerator 100 obtains second generated data. As described above, the refrigerator 100 may generate the second generated data by calculating a rate of temperature change for each user action. The second generated data may include at least one of first sub-generated data, second sub-generated data, or third sub-generated data. During a user action measurement period, the refrigerator 100 may measure a door opening duration and a value of internal temperature change caused by door opening, and define, as the first sub-generated data, a value obtained by dividing a product of the door opening duration and the value of the internal temperature change caused by the door opening by a duration of the user action measurement period. Furthermore, during the user action measurement period, the refrigerator 100 may measure a door opening duration, a value of internal temperature change caused by the door opening, and an ambient temperature, and define, as the second sub-generated data, a value obtained by dividing a product of the door opening duration, the value of the internal temperature change caused by the door opening, and the ambient temperature by a duration of the user action measurement period. In addition, during a user action measurement period, the refrigerator 100 may measure, for each of at least one door opening event, a door opening duration and a value of internal temperature change caused by door opening, and define, as the third sub-generated data, a value obtained by dividing a sum of products of the door opening duration and the value of the internal temperature change caused by the door opening for each of the at least one door opening event by a duration of the user action measurement period.

Operation S504 and operation S506 may be performed in parallel with each other or sequentially. The order of processing operation S504 and operation S506 is not limited to the order shown in the flowchart of FIG. 5, and the operations may be performed periodically or at a predetermined time point during an operation time of the refrigerator 100.

Next, in operation S508, the refrigerator 100 predicts an internal temperature of the cooling compartment 214 after a reference time. The refrigerator 100 may predict the internal temperature of the cooling compartment 214 by using, for each cooling compartment 214, the measured internal temperature, the first generated data, the second generated data, and an AI model. According to an embodiment of the present disclosure, the processor 210 inputs the internal temperature, the first generated data, and the second generated data to the AI model, and the AI model may output a predicted temperature after the reference time. In addition, according to an embodiment of the present disclosure, the processor 210 may obtain a model prediction value by inputting the internal temperature to the AI model, and then postprocess the model prediction value by using the first generated data and the second generated data to obtain a predicted temperature, which is a predicted value of the internal temperature.

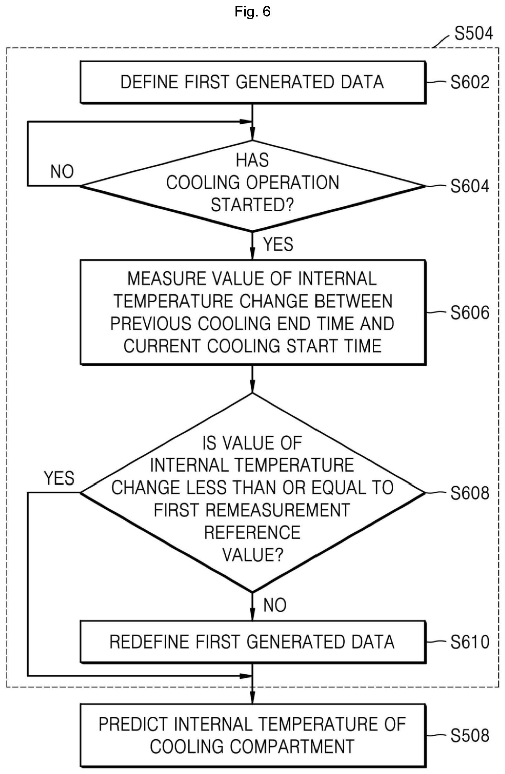

FIG. 6 is a diagram illustrating a process of defining and updating first generated data, according to an embodiment of the present disclosure.

According to an embodiment of the present disclosure, first generated data is updated only when a predetermined condition is satisfied, and when the predetermined condition is not satisfied, the refrigerator 100 uses previously defined first generated data as is. A condition for updating the first generated data may be determined based on a value of internal temperature change between a previous cooling operation end time and a current cooling operation start time. When the value of the internal temperature change exceeds a first remeasurement reference value, the refrigerator 100 may update the first generated data.

First, in operation S602, the refrigerator 100 defines the first generated data. When the refrigerator 100 has just been installed, the first generated data may be defined as an initial value. Thereafter, the first generated data is defined as the refrigerator 100 operates.

Next, in operation S604, the refrigerator 100 determines whether a cooling operation has started. While monitoring an internal temperature of the cooling compartment 214, the refrigerator 100 may start a cooling operation of the cooling compartment 214 when the internal temperature of the cooling compartment 214 rises to or above a reference temperature. The refrigerator 100 performs the cooling operation by supplying cold air from a cold air supply device to the cooling compartment 214.

If the cooling operation has started, in operation S606, the refrigerator 100 measures a value of internal temperature change between a previous cooling end time and a current cooling start time. The previous cooling end time refers to an end time of a previously performed cooling operation. The current cooling start time refers to a start time of the cooling operation detected in operation S604. When a cooling operation is performed, the refrigerator 100 may store a cooling operation end time and an internal temperature at the cooling operation end time in the memory 212, and in a next cooling operation, may use the stored values when calculating the first generated data or determining whether to update the first generated data.

Next, in operation S608, the refrigerator 100 determines whether the value of the internal temperature change between the previous cooling end time and the current cooling start time is less than or equal to the first remeasurement reference value. The first remeasurement reference value may be determined, for example, in a range of 1 °C to 5 °C. For example, the first remeasurement reference value may be determined as 3 °C.

If the value of the internal temperature change between the previous cooling end time and the current cooling start time is less than or equal to the first remeasurement reference value, the refrigerator 100 uses the previously defined first generated data. If the value of the internal temperature change between the previous cooling end time and the current cooling start time exceeds the first remeasurement reference value, the refrigerator 100 redefines the first generated data by using the measured internal temperature.

After the first generated data is defined in operation S504, the refrigerator 100 predicts, in operation S508, the internal temperature of the cooling compartment 214 by using the defined first generated data.

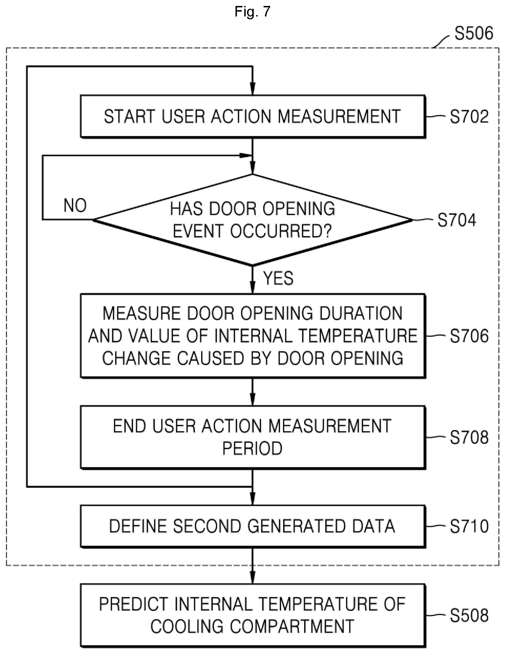

FIG. 7 is a diagram illustrating a process of obtaining second generated data, according to an embodiment of the present disclosure.

According to an embodiment of the present disclosure, the refrigerator 100 obtains second generated data by detecting a user action during a predetermined user action measurement time period.

First, in operation S702, the refrigerator 100 starts user action measurement. The user action measurement includes an operation of detecting opening and closing of a door. According to an embodiment of the present disclosure, the refrigerator 100 may perform the user action measurement during a predetermined time period at predetermined intervals. For example, the refrigerator 100 may measure a user action by detecting door opening and door closing for 10 minutes every 10 minutes.

Next, in operation S704, the refrigerator 100 determines whether a door opening event has occurred. The refrigerator 100 detects the door opening or door closing using a detection value of a door sensor. When door opening is detected, the refrigerator 100 determines that the door opening event has occurred.

Next, when the door opening event is detected, in operation S706, the refrigerator 100 measures, during the user action measurement, a door opening duration and a value of internal temperature change caused by the door opening. The refrigerator 100 may detect door opening and door closing by using a detection value of the door sensor, and obtain the door opening duration by calculating a time difference between a door opening time and a door closing time. In addition, the refrigerator 100 may obtain an internal temperature at the door opening time and an internal temperature at the door closing time from the cooling compartment temperature sensor 216, and obtain the value of the internal temperature change by calculating a temperature difference between the internal temperature at the door opening time and the internal temperature at the door closing time.

Next, in operation S708, when a predetermined time has elapsed from a user action measurement start time, the refrigerator 100 ends the user action measurement. For example, when 10 minutes have elapsed from the user action measurement start time, the refrigerator 100 ends the corresponding user action measurement period. When the corresponding user action measurement period ends, the refrigerator 100 starts a next user action measurement in operation S702.

Next, in operation S710, the refrigerator 100 defines the second generated data by using the door opening duration and the value of the internal temperature change caused by the door opening and closing, which are measured during the user action measurement period. The refrigerator 100 may define first sub-generated data, second sub-generated data, or third sub-generated data.

Next, in operation S508, the refrigerator 100 predicts the internal temperature of the cooling compartment 214 by using the defined second generated data.

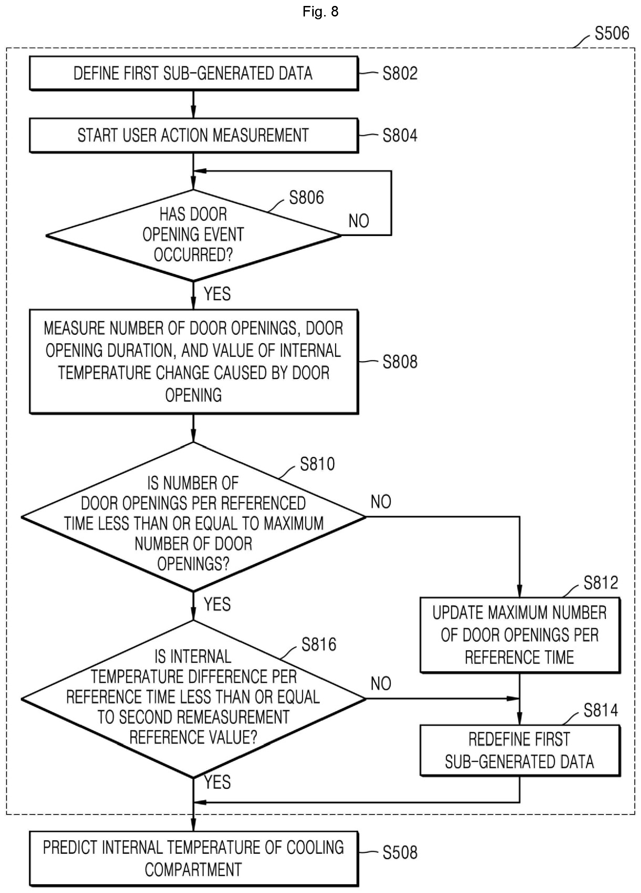

FIG. 8 is a diagram illustrating a process of defining and updating first sub-generated data of second generated data, according to an embodiment of the present disclosure.

According to an embodiment of the present disclosure, the refrigerator 100 may define first sub-generated data by using a door opening duration and a value of internal temperature change caused by door opening and closing, which are measured during a user action measurement period. In addition, the refrigerator 100 may determine a predetermined condition based on the number of door openings or the temperature change, and when the predetermined condition is satisfied, the refrigerator 100 may update the first sub-generated data.

First, in operation S802, the refrigerator 100 defines the first sub-generated data. When the refrigerator 100 has just been installed, the first sub-generated data may be defined as an initial value. Thereafter, the first sub-generated data is defined as the refrigerator 100 operates.

Next, in operation S804, the refrigerator 100 starts user action measurement. The user action measurement includes an operation of detecting opening and closing of a door. According to an embodiment of the present disclosure, the refrigerator 100 may perform the user action measurement during a predetermined time period at predetermined intervals. For example, the refrigerator 100 may measure a user action by detecting door opening and door closing for 10 minutes every 10 minutes.

Next, in operation S806, the refrigerator 100 determines whether a door opening event has occurred.

Then, in operation S808, the refrigerator 100 measures the number of door openings, a door opening duration, and a value of internal temperature change caused by door opening. The door opening duration is a door opening duration of the door opening event detected in operation S806. The value of the internal temperature change is the value of the internal temperature change associated with the corresponding door opening event.

Next, in operation S810, the refrigerator 100 determines whether the number of door openings per reference time is less than or equal to a maximum number of door openings per reference time. The reference time may be variously determined as several minutes or several tens of minutes. For example, the reference time may be determined as 1 minute. The maximum number of door openings per reference time refers to a maximum value of the number of door openings per reference time previously measured.

If the number of door openings per reference time exceeds the maximum number of door openings per reference time, in operation S812, the refrigerator 100 updates the maximum number of door openings per reference time to the number of door openings per reference time calculated in operation S810.

In addition, in operation S814, the refrigerator 100 redefines the first sub-generated data. The refrigerator 100 may define the first sub-generated data by using the door opening duration and the value of the internal temperature change caused by the door opening measured in operation S808. The refrigerator 100 may define the first sub-generated data by using Equation 2 described above. The order in which operation S812 and operation S814 are performed is not limited to the order shown in FIG. 8. Operation S812 and operation S814 may be performed in parallel or sequentially. The refrigerator 100 may perform operations S812 and S814 in the order of S812 and S814, or in the order of S814 and S812.

If the number of door openings per reference time is less than or equal to the maximum number of door openings per reference time in operation S810, the refrigerator 100 determines, in operation S816, whether an internal temperature difference per reference time is less than or equal to a second remeasurement reference value. The internal temperature difference per reference time refers to a difference between a maximum value and a minimum value of the internal temperature during the reference time. The reference time may be defined as, for example, several minutes or several tens of minutes. The reference time may be defined as, for example, 3 minutes, 5 minutes, or 10 minutes. The second remeasurement reference value may be defined as, for example, 7 °C to 13 °C. The second remeasurement reference value may be defined as, for example, 10 °C.

If the internal temperature difference per reference time exceeds the second remeasurement reference value, the refrigerator 100 redefines the first sub-generated data in operation S814. The refrigerator 100 may define the first sub-generated data by using the door opening duration and the value of the internal temperature change caused by the door opening measured in operation S808. The refrigerator 100 may define the first sub-generated data by using Equation 2 described above.

If the internal temperature difference per reference time is less than or equal to the second remeasurement reference value, the refrigerator 100 may use the existing first sub-generated data as is.

After the first sub-generated data is defined, in operation S508, the refrigerator 100 predicts the internal temperature of the cooling compartment 214 by using the first sub-generated data.

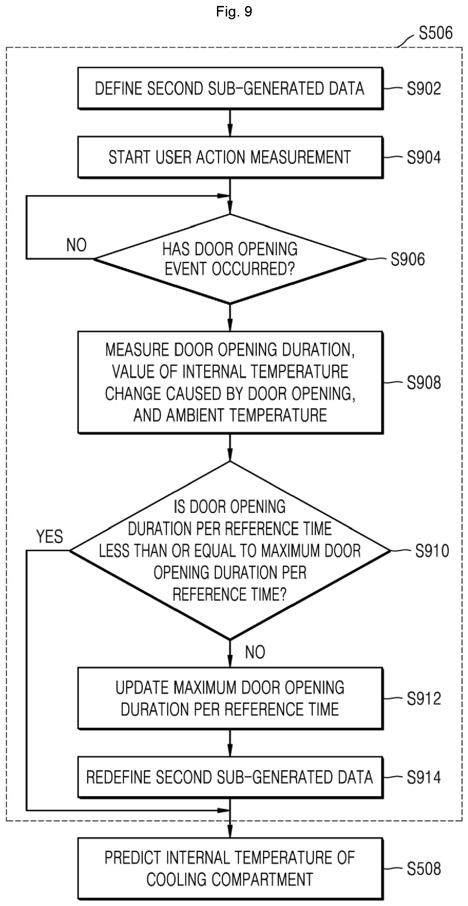

FIG. 9 is a diagram illustrating a process of defining and updating second sub-generated data of second generated data, according to an embodiment of the present disclosure.

According to an embodiment of the present disclosure, the refrigerator 100 may define second sub-generated data by using a door opening duration, a value of internal temperature change caused by door opening and closing, and an ambient temperature, which are measured during a user action measurement period. In addition, the refrigerator 100 may determine a predetermined condition based on the door opening duration, and when the predetermined condition is satisfied, the refrigerator 100 may update the second sub-generated data.

First, in operation S902, the refrigerator 100 defines the second sub-generated data. When the refrigerator 100 has just been installed, the second sub-generated data may be defined as an initial value. Thereafter, the second sub-generated data is defined as the refrigerator 100 operates.

Next, in operation S904, the refrigerator 100 starts user action measurement. The user action measurement includes an operation of detecting opening and closing of a door. According to an embodiment of the present disclosure, the refrigerator 100 may perform the user action measurement during a predetermined time period at predetermined intervals. For example, the refrigerator 100 may measure a user action by detecting door opening and door closing for 10 minutes every 10 minutes.

Next, in operation S906, the refrigerator 100 determines whether a door opening event has occurred.

Then, in operation S908, the refrigerator 100 measures a door opening duration, a value of internal temperature change caused by door opening, and an ambient temperature. The door opening duration is a door opening duration of the door opening event detected in operation S908. The value of the internal temperature change is the value of the internal temperature change associated with the corresponding door opening event. The ambient temperature is a sensor detection value of an ambient temperature sensor of the refrigerator 100.

Next, in operation S910, the refrigerator 100 determines whether a door opening duration per reference time is less than or equal to a maximum door opening duration per reference time. The reference time may be variously determined as several minutes or several tens of minutes. For example, the reference time may be determined as 1 minute.

If the door opening duration per reference time exceeds the maximum door opening duration per reference time, in operation S912, the refrigerator 100 updates the maximum door opening duration per reference time to the door opening duration per reference time calculated in operation S910.

In addition, in operation S914, the refrigerator 100 redefines the second sub-generated data. The refrigerator 100 may define the second sub-generated data by using the door opening duration, the value of the internal temperature change caused by the door opening, and the ambient temperature, which are measured in operation S908. The refrigerator 100 may define the second sub-generated data by using Equation 3 described above. The order in which operation S912 and operation S914 are performed is not limited to the order shown in FIG. 9. Operation S912 and operation S914 may be performed in parallel or sequentially. The refrigerator 100 may perform operations S912 and S914 in the order of S912 and S914, or in the order of S914 and S912.

If it is determined in operation S910 that the door opening duration per reference time is less than or equal to the maximum door opening duration per reference time, the refrigerator 100 may use the existing second sub-generated data as is.

After the second sub-generated data is defined, in operation S508, the refrigerator 100 predicts the internal temperature of the cooling compartment 214 by using the second sub-generated data.

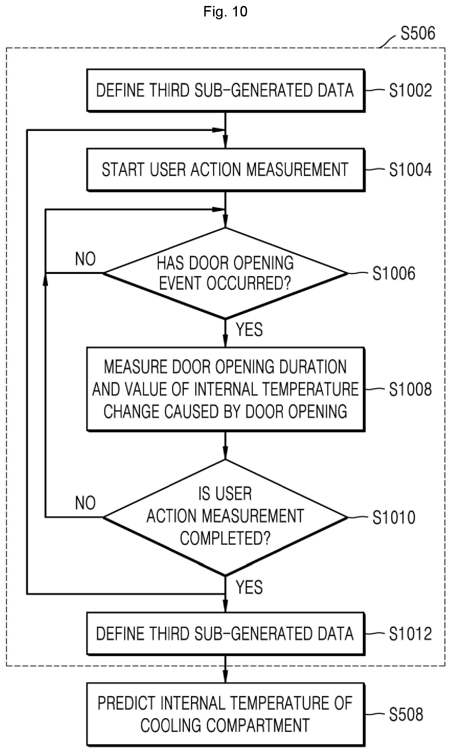

FIG. 10 is a diagram illustrating a process of defining third sub-generated data of second generated data, according to an embodiment of the present disclosure.

According to an embodiment of the present disclosure, the refrigerator 100 may define third sub-generated data by accumulating a door opening duration and a value of internal temperature change caused by door opening and closing, which are measured during a user action measurement period.

First, in operation S1002, the refrigerator 100 defines the third sub-generated data. When the refrigerator 100 has just been installed, the third sub-generated data may be defined as an initial value. Thereafter, the third sub-generated data is defined as the refrigerator 100 operates.

Next, in operation S1004, the refrigerator 100 starts user action measurement. The user action measurement includes an operation of detecting opening and closing of a door. According to an embodiment of the present disclosure, the refrigerator 100 may perform the user action measurement for each user action measurement period. The user action measurement period may be set to be longer than the user action measurement period for the first sub-generated data. For example, the user action measurement period may be set to 1 week, 2 weeks, 1 month, several months, or 1 year. For example, the refrigerator 100 may measure a user action by detecting door opening and door closing for 1 month every month.

Next, in operation S1006, the refrigerator 100 determines whether a door opening event has occurred.

Next, in operation S1008, the refrigerator 100 measures, during the user action measurement period, a door opening duration and a value of internal temperature change caused by door opening. The refrigerator 100 may collect and store the door opening duration and the value of the internal temperature change measured during the user action measurement period. The door opening duration is a door opening duration of the door opening event detected in operation S1006. The value of the internal temperature change is the value of the internal temperature change associated with the corresponding door opening event.

Next, when the user action measurement period has elapsed from the start of the user action measurement in operation S1004, the refrigerator 100 ends the corresponding user action measurement period in operation S1010. When the corresponding user action measurement period ends, the refrigerator 100 starts a next user action measurement in operation S1002.

When the user action measurement is completed, the refrigerator 100 defines the third sub-generated data in operation S1012. The refrigerator 100 defines the third sub-generated data by using the door opening duration and the value of the internal temperature change collected and stored in operation S1008. The refrigerator 100 may define the third sub-generated data by using Equation 4 described above. The refrigerator 100 may calculate the third sub-generated data by dividing the cumulative sum of the values of (T24-T23) × (F22-F21) by a duration (T22-T21) of the user action measurement period.

Next, in operation S508, the refrigerator 100 predicts the internal temperature of the cooling compartment 214 by using the defined third sub-generated data.

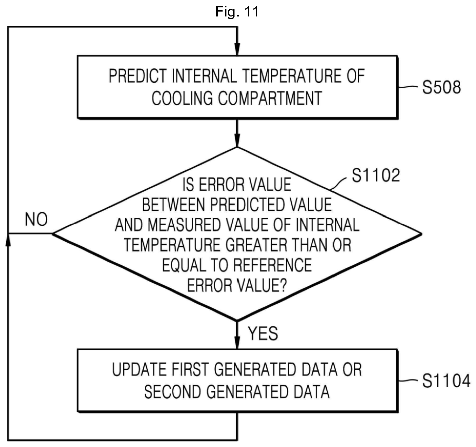

FIG. 11 is a diagram illustrating a process of updating first generated data or second generated data, according to an embodiment of the present disclosure.

According to an embodiment of the present disclosure, when a predicted value of an internal temperature differs from a measured value of the internal temperature by a reference error value or more.

First, in operation S508, the refrigerator 100 predicts the internal temperature of the cooling compartment 214. The refrigerator 100 may predict the internal temperature by using the measured internal temperature and the current first generated data and second generated data.

Next, in operation S1102, the refrigerator 100 determines whether an error value between the predicted value and the measured value of the internal temperature is greater than or equal to a reference error value. The reference error value may be defined as, for example, 2 °C to 4 °C. The reference error value may be defined as, for example, 3 °C.

If it is determined that the error value between the predicted value and the measured value of the internal temperature is greater than or equal to the reference error value, the refrigerator 100 updates at least one of the first generated data or the second generated data in operation S1104. According to an embodiment of the present disclosure, the refrigerator 100 may update both the first generated data and the second generated data in operation S1104.

If it is determined that the error value between the predicted value and the measured value of the internal temperature is less than the reference error value, the refrigerator 100 uses the currently defined first generated data and the currently defined second generated data as they are. However, if it is determined that an update is required based on another determination condition (e.g., the number of door openings per reference time, an internal temperature difference per reference time, or a door opening duration per reference time), the first generated data and the second generated data may be updated.

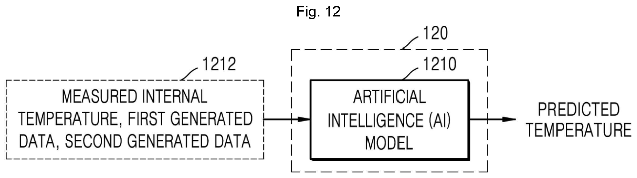

FIG. 12 is a diagram illustrating a temperature prediction model according to an embodiment of the present disclosure.

According to an embodiment of the present disclosure, the refrigerator 100 may obtain a predicted temperature, which is a predicted value of an internal temperature, by using a temperature prediction model. The temperature prediction model 120 may include an AI model 1210. The AI model 1210 may be executed by the processor 210 and the memory 212, or may be executed by an external server. The AI model 1210 may receive a measured internal temperature, first generated data, and second generated data as input data 1212, and may output the predicted temperature.

The AI model 1210 may be a machine learning model trained using the measured internal temperature, the first generated data, and the second generated data as training data. The second generated data may include at least one of first sub-generated data, second sub-generated data, or third sub-generated data. According to an embodiment of the present disclosure, the AI model 1210 may be trained during a product development stage and may be installed in the refrigerator 100 in a trained state. In addition, according to an embodiment of the present disclosure, the AI model 1210 may be trained via reinforcement learning on the refrigerator 100 by using the collected internal temperature, first generated data, and second generated data.

According to an embodiment of the present disclosure, the input data 1212 of the AI model 1210 may further include the cooling compartment sensor data and the refrigerator sensor data described with reference to FIG. 4. The AI model 1210 may receive, as input, the cooling compartment sensor data and the refrigerator sensor data for the corresponding cooling compartment 214, together with the internal temperature, the first generated data, and the second generated data. The AI model 1210 may be trained using the internal temperature, the cooling compartment sensor data, the refrigerator sensor data, the first generated data, and the second generated data as training data.

The processor 210 may include one or a plurality of processors. In this case, the one or plurality of processors 210 may be general-purpose processors such as a CPU, an AP, or a DSP, dedicated graphics processors such as a GPU or a VPU, or dedicated AI processors such as an NPU. The one or the plurality of processors 210 control processing of input data according to the AI model 1210 or predefined operation rules stored in the memory 212. Alternatively, when the one or plurality of processors 210 are dedicated AI processors, the dedicated AI processors may be designed with a hardware structure specialized for processing the particular AI model 1210.

The predefined operation rules or AI model 1210 are created through a training process. In this case, creation through the training process means that the predefined operation rules or AI model 1210 set to perform desired characteristics (or purposes) are generated by training the base AI model 1210 based on a large number of training data via a learning algorithm. Examples of the learning algorithm may include, but are not limited to, supervised learning, unsupervised learning, semi-supervised learning, and reinforcement learning.

The AI model 1210 may consist of a plurality of neural network layers. Each of the plurality of neural network layers has a plurality of weight values and performs a neural network operation via computations between a result of operation in a previous layer and the plurality of weight values. The plurality of weight values assigned to each of the plurality of neural network layers may be optimized by a result of training the AI model 1210. For example, the plurality of weight values may be updated to reduce or minimize a loss or cost value obtained in the AI model 1210 during a training process. An artificial neural network may include a deep neural network (DNN), and may be, for example, but is not limited to, a convolutional neural network (CNN), a DNN, a recurrent neural network (RNN), a restricted Boltzmann machine (RBM), a deep belief network (DBN), a bidirectional recurrent DNN (BRDNN), or a deep Q-network (DQN).

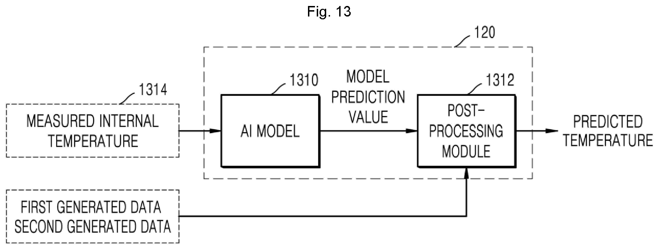

FIG. 13 is a diagram illustrating a temperature prediction model according to an embodiment of the present disclosure.

According to an embodiment of the present disclosure, the temperature prediction model 120 may include an AI model 1310 and a post-processing module 1312. The AI model 1310 receives a measured internal temperature and outputs a model prediction value. The post-processing module 1312 receives the model prediction value, receives first generated data and the second generated data, and outputs a predicted temperature, which is a predicted value of the internal temperature.

The AI model 1310 may be a machine-learning model trained using the internal temperature as training data. According to an embodiment of the present disclosure, the AI model 1310 may be trained during a product development stage and may be installed in the refrigerator 100 in a trained state. In addition, according to an embodiment of the present disclosure, the AI model 1310 may be trained via reinforcement learning on the refrigerator 100 by using collected internal temperature.

According to an embodiment of the present disclosure, input data 1314 of the AI model 1310 may further include the cooling compartment sensor data and the refrigerator sensor data described with reference to FIG. 4. The AI model 1310 may receive, as input, the cooling compartment sensor data and the refrigerator sensor data for the corresponding cooling compartment 214, together with the internal temperature. The AI model 1310 may be trained using the internal temperature, the cooling compartment sensor data, and the refrigerator sensor data as training data.

The AI model 1310 generates and outputs a model prediction value by receiving and processing the input data 1314. The post-processing module 1312 receives the model prediction value from the AI model 1310 and outputs a predicted temperature. The post-processing module 1312 calculates the predicted temperature by post-processing the model prediction value using the first generated data and the second generated data. The post-processing module 1312 processes the model prediction value by using the first generated data, first sub-generated data, second sub-generated data, and third sub-generated data.

According to an embodiment of the present disclosure, when the first generated data is a, the first sub-generated data is b, the second sub-generated data is c, the third sub-generated data is d, and the model prediction value is Ym, the predicted temperature Y may be calculated according to Equation 5.$Y = \left({ax}_{1}+{bx}_{2}+{cx}_{3}+{dx}_{4}\right) \times {Y}_{m}$ Equation 5

According to an embodiment of the present disclosure, x1, x2, x3, and x4 of Equation 5 may be calculated based on training data. According to an embodiment of the present disclosure, x1, x2, x3, and x4 may be defined as values that satisfy Equation 6 by using a technique utilizing linear regression or a fully connected (FC) layer. Ym is the model prediction value, and Y0 is the measured internal temperature. The refrigerator 100 or a predetermined training device (not shown) may obtain the model prediction value Ym and the measured internal temperature Y0, and calculate values by performing a reverse calculation using the model prediction value Ym and the measured internal temperature Y0. When the temperature prediction model 120 is updated, the values of x1, x2, x3, and x4 may be updated.$\frac{{Y}_{0}}{{Y}_{m}} = {ax}_{1} + {bx}_{2} + {cx}_{3} + {dx}_{4}$ Equation 6

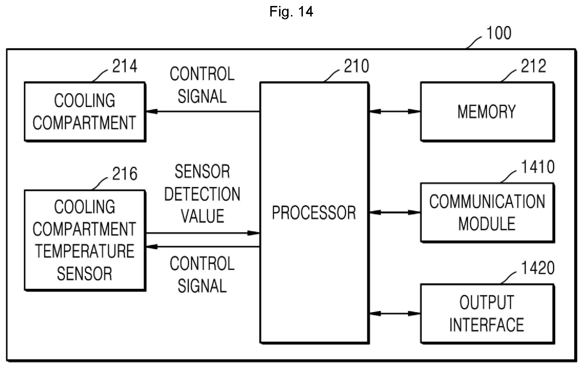

FIG. 14 is a diagram illustrating a structure of a refrigerator according to an embodiment of the present disclosure.

According to an embodiment of the present disclosure, the refrigerator 100 may include the processor 210, the memory 212, the cooling compartment 214, the cooling compartment temperature sensor 216, a communication module 1410, and an output interface 1420. In FIG. 14, repeated descriptions with respect to FIG. 2 are omitted, and differences from FIG. 2 are mainly described.

The communication module 1410 transmits signals or data to a server or an external device, and receives signals or data from the server or the external device. According to an embodiment of the present disclosure, the communication module 1410 may transmit a high-load notification to the server or the external device.

Furthermore, according to an embodiment of the present disclosure, the communication module 1410 may communicate with the server through a network. The communication module 1410 may connects to the network via an AP device and communicate with the server. The communication module 1410 may transmit status information of the refrigerator 100 to the server to synchronize the status information of the refrigerator 100 with the server. In addition, the communication module 1410 may receive, from the server, an operation mode or setting information of the refrigerator 100 that is set using a user terminal or the like.

The communication module 1410 may include a wireless communication module (e.g., a cellular communication module, a short-range wireless communication module, or a global navigation satellite system (GNSS) communication module) or a wired communication module (e.g., a LAN communication module or a power line communication (PLC) module). In addition, the communication module 1410 may perform short-range communication by using, for example, Bluetooth, Bluetooth Low Energy (BLE), near field communication (NFC), wireless LAN (WLAN) (e.g., Wi-Fi), ZigBee, Infrared Data Association (IrDA), Wi-Fi Direct (WFD), ultra-wideband (UWB), Ant+ communication, etc. Furthermore, for example, the communication module 1410 may perform long-range communication, and communicate with an external device over, for example, a legacy cellular network, a 5th generation (5G) network, a next-generation communication network, the Internet, or a computer network (e.g., a LAN or WAN).

In addition, for example, the communication module 1410 may use mobile communication, and transmit and receive a wireless signal to and from at least one of a base station, an external terminal, or a server on a mobile communication network.

According to an embodiment of the present disclosure, the communication module 1410 is connected to an AP in the home via Wi-Fi communication. The communication module 1410 may communicate with an external device via the AP.

The output interface 1420 outputs signals or data related to the refrigerator 100. The output interface 1420 may include, for example, a display, a speaker, a light-emitting diode (LED) lamp, a touchscreen, or a speaker.

According to an embodiment of the present disclosure, when a load of the cooling compartment 214 increases to or above a predetermined threshold, the processor 210 may generate a high-load notification and output it through the refrigerator 100 or an external device. For example, when a user places a hot object in the cooling compartment 214, a high load may occur in the refrigerator 100. Additionally, for example, when the user leaves a door of the cooling compartment 214 open for a long period of time, a high load may occur in the refrigerator 100. According to an embodiment of the present disclosure, the processor 210 may detect a high-load state of the cooling compartment 214 by using second generated data. The second generated data may include at least one of first sub-generated data, second sub-generated data, or third sub-generated data.

According to an embodiment of the present disclosure, the processor 210 may detect a high-load state of the cooling compartment 214 by using third sub-generated data. The processor 210 may determine that the cooling compartment 214 is in a high-load state when a value of the third sub-generated data is significantly smaller than a previous value. According to an embodiment of the present disclosure, the processor 210 may determine that the cooling compartment 214 is in the high-load state when the third sub-generated data satisfies a condition of Equation 7.$Current \left(A\right) < A 1 - 1.5 \times IQR$ Equation 7

Current (A) is a current value of the third sub-generated data, Q1 is a value at a lower 25th percentile of the third sub-generated data, and IQR is a difference between a value at an upper 75th percentile of the third sub-generated data and the value at the lower 25th percentile thereof. The processor 210 may obtain a histogram representing a distribution of the third sub-generated data and may obtain the Q1 value and the IQR value from the histogram. The processor 210 may update the third sub-generated data at predetermined intervals, and each time the third sub-generated data is updated, determine whether the third sub-generated data satisfies the condition of Equation 7.

When the high-load state is detected, the processor 210 may generate a high-load notification. According to an embodiment of the present disclosure, the processor 210 may transmit the high-load notification to a server via the communication module 1410 and request that the high-load notification be output through an external device. In addition, according to an embodiment of the present disclosure, the processor 210 may output the high-load notification via the output interface 1420.

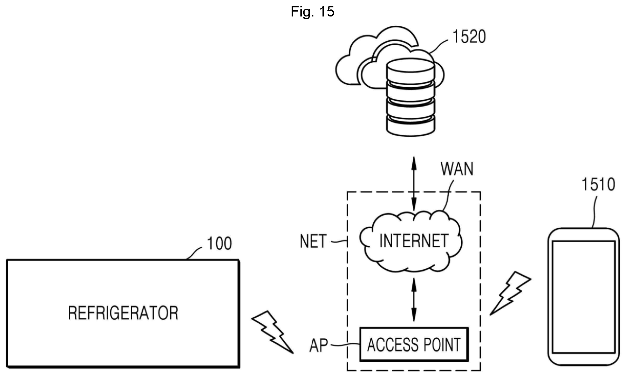

FIG. 15 is a diagram illustrating a refrigerator, an external device, and a server, according to an embodiment of the present disclosure.

According to an embodiment of the present disclosure, the refrigerator 100 communicates with an external device 1510 and a server 1520 through the communication module 1410. The refrigerator 100 may be connected to other home appliances, the external device 1510, or the server 1520 via a network NET.

The external device 1510 may include a communication module capable of communicating with the refrigerator 100 and the server 1520, a user interface for receiving a user input or outputting information to the user, at least one processor for controlling an operation of the external device 1510, and at least one memory for storing a program for controlling the operation of the external device 1510.

The external device 1510 may be carried by the user or may be located in the user's home, office, or the like. The external device 1510 may include, for example, a personal computer, a terminal, a portable telephone, a smartphone, a handheld device, a wearable device, and the like, but is not limited thereto.

A program (e.g., an application) for controlling the refrigerator 100 may be stored in the memory of the external device 1510. The external device 1510 may be sold with an application for controlling the refrigerator 100 installed, or may be sold without the application installed. When the external device 1510 is sold without the application for controlling the refrigerator 100 installed, the user may download the application from an external server providing the application and install the application on the external device 1510.

The user may control the refrigerator 100 by using an application installed on the external device 1510. For example, when the user executes the application installed on the external device 1510, identification information of the refrigerator 100 associated with the same user account as that of the external device 1510 may appear on an application execution window. The user may perform desired control of the refrigerator 100 through the application execution window. When the user inputs a control command for the refrigerator 100 via the application execution window, the external device 1510 may transmit the control command directly to the refrigerator 100 through a short-range network, or transmit the control command to the refrigerator 100 via the server 1520.

The application of the external device 1510 may receive various user inputs for controlling the refrigerator 100. The application provides a graphical user interface (GUI) for receiving various user inputs and receives a user input through the GUI. While communicating with the server 1520, the external device 1510 updates status information of the refrigerator 100, and provides the updated status information to the user through the application. Additionally, the external device 10 communicates with the server 620 to transmit, to the refrigerator 100, a user input received through the application.

The network NET may include both a wired network and a wireless network. The wired network includes a cable network, a telephone network, or the like, and the wireless network may include any network that transmits and receives signals through radio waves. The wired network and the wireless network may be connected to each other.

The network NET may include a WAN such as the Internet, a LAN formed around an AP, and a wireless personal area network (WPAN) that does not use the AP. The short-range wireless network may include, but is not limited to, Bluetooth^{™} (Institute of Electrical and Electronics Engineers (IEEE) 802.15.1), ZigBee (IEEE 802.15.4), WFD, NFC, Z-Wave, and the like.

The AP may connect a LAN, to which the refrigerator 100 and the external device 1510 are connected, to a WAN, to which the server 1520 is connected. The air conditioner 100 or the external device 1510 may be connected to the server 1520 through the WAN.

An AP may include a device that allows devices to be connected using relevant standards utilizing Wi-Fi in a computer network.

According to embodiments of the present disclosure, the AP may include an AP implemented in hardware and an AP implemented in software.

For example, the AP may relay data between a wireless device and a wired device on a network. However, the present disclosure is not limited thereto, and the AP may relay data between wired devices or between wireless devices. Moreover, the AP may also be referred to as a relay device.

The AP may communicate with the refrigerator 100 and the external device 1510 by using wireless communication such as Wi-Fi^{™} (IEEE 802.11), and connect to a WAN by using wired communication.

The refrigerator 100 may transmit information regarding an operation or a status thereof to the server 1520 through the network NET. For example, the refrigerator 100 may transmit the information regarding the operation or the status to the server 1520 through Wi-Fi^{™} (IEEE 802.11) communication.

When a Wi-Fi communication module is not provided in the refrigerator 100, the refrigerator 100 may transmit information regarding an operation or status thereof to the server 1520 via another home appliance having a Wi-Fi communication module. For example, when the refrigerator 100 transmits the information regarding the operation or status thereof to another home appliance via a short-range wireless network (e.g., BLE communication), the other home appliance may transmit the information regarding the operation or status of the refrigerator 100 to the server 1520. In addition, for example, when a Wi-Fi communication module is not provided in the refrigerator 100, the refrigerator 100 may be connected to a communication relay device by wire and perform Wi-Fi communication through the communication relay device.

The refrigerator 100 may provide the information regarding the operation or the status of the refrigerator 100 to the server 1520 based on a prior approval from the user. The transmission of the information to the server 1520 may be performed when a request is received from the server 1520, when a specific event occurs in the refrigerator 100, or periodically or in real time.

When the information regarding the operation or the status is received from the refrigerator 100, the server 1520 may update previously stored information related to the refrigerator 100. The server 1520 may transmit the information regarding the operation or status of the refrigerator 100 to the external device 1510 through the network NET.

When a request is received from the external device 1510, the server 1520 may transmit, to the external device 1510, information regarding an operation or a status of the refrigerator 100. For example, when the user executes an application connected to the server 1520 on the external device 1510, the external device 1510 may request and receive the information regarding the operation or the status of the refrigerator 100 from the server 1520 through the application. When the information regarding the operation or the status of the refrigerator 100 is received from the refrigerator 100, the server 1520 may transmit the information regarding the operation or the status of the refrigerator 100 to the external device 1510 in real time. The server 1520 may also periodically transmit, to the external device 1510, the information regarding the operation or the status of the refrigerator 100. The external device 1510 may provide the information regarding the operation or the status of the refrigerator 100 to the user by displaying the information in an application execution window.

The refrigerator 100 may obtain various pieces of information from the server 1520 and may provide the obtained information to the user. In addition, the refrigerator 100 may receive, from the server 1520, a file for updating pre-installed software or data related to the pre-installed software, and update the pre-installed software or the data related to the pre-installed software based on the received file.

The refrigerator 100 may operate according to a control command received from the server 1520. For example, when the refrigerator 100 obtains the user's prior approval to operate according to the control command from the server 1520 even without a user input, the refrigerator 100 may operate according to the control command received from the server 1520. The control command received from the server 1520 may include, but is not limited to, a control command input by the user through the external device 1510 or a control command generated by the server 1520 based on a preset condition.

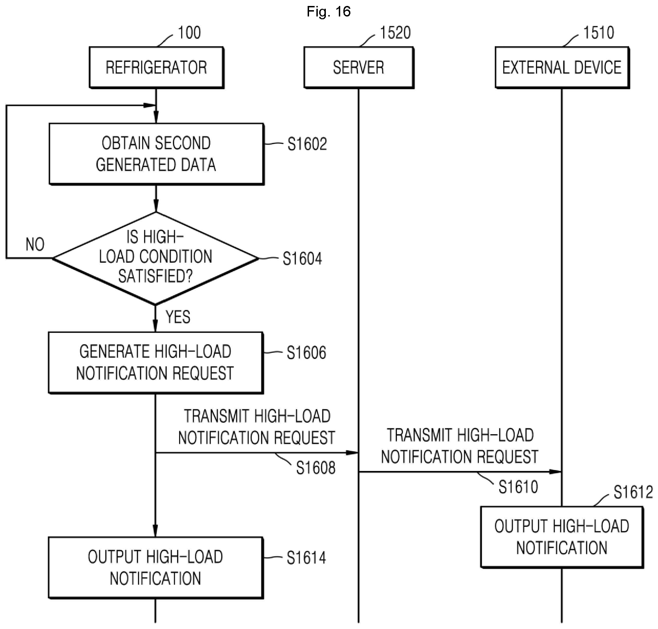

FIG. 16 is a diagram illustrating a process of outputting a high-load notification through an external device or a refrigerator, according to an embodiment of the present disclosure.

According to an embodiment of the present disclosure, the refrigerator 100 may determine whether a high load has occurred in the refrigerator 100 by using second generated data and, when the high load has occurred, may output a high-load notification. The high-load notification may be output through at least one of the refrigerator 100 or the external device 1510.

First, in operation S1602, the refrigerator 100 may obtain second generated data. According to an embodiment of the present disclosure, the refrigerator 100 may obtain third sub-generated data and may determine whether a high-load condition is satisfied by using the third sub-generated data. The second generated data may be obtained periodically at predetermined time intervals.

Next, in operation S1604, the refrigerator 100 may determine whether the second generated data satisfies the high-load condition. Each time the second generated data is updated, the refrigerator 100 may determine, in operation S1604, whether the second generated data satisfies the high-load condition. According to an embodiment of the present disclosure, the refrigerator 100 determines whether the high-load condition is satisfied by determining whether the third sub-generated data satisfies the condition of Equation 7 described above. When the third sub-generated data satisfies the condition of Equation 7, the refrigerator 100 determines that the high-load condition is satisfied. When the third sub-generated data does not satisfy the condition of Equation 7, the refrigerator 100 determines that the high-load condition is not satisfied.

When the second generated data satisfies the high-load condition, the refrigerator 100 may generate a high-load notification request in operation S1606. The high-load notification request may include information indicating that a high load has occurred. Furthermore, the high-load notification request may include information regarding a device to which the high-load notification is to be transmitted (e.g., the external device 1510, another home appliance, the server 1520, etc.). In addition, the high-load notification request may include identification information, account information, authentication information, etc., of the refrigerator 100.

Next, in operation S1608, the refrigerator 100 may transmit the high-load notification request to the server 1520. The refrigerator 100 may transmit the high-load notification request to the server 1520 via the communication module 1410.

In operation S1610, the server 1520 may transmit the high-load notification request to the external device 1510. Upon receiving the high-load notification request, the server 1520 may authenticate the high-load notification request and identify account information by using the account information and the authentication information included in the high-load notification request. Furthermore, the server 1520 may identify the external device 1510 registered to an account of the refrigerator 100, and transmit the high-load notification request to the identified external device 1510. The server 1520 may determine, for the corresponding account, a setting indicating whether to output the high-load notification request through the external device 1510, and when the account is set such that the high-load notification request is output through the external device 1510, the server 1520 may transmit the high-load notification request to the external device 1510. If the account of the refrigerator 100 is set such that the high-load notification request is not output through the external device 1510, the server 1520 may not transmit the high-load notification request to the external device 1510.

Next, in operation S1612, the external device 1510 may output a high-load notification based on the high-load notification request received from the server 1520. The external device 1510 may output the high-load notification through an output interface.

In addition, in operation S1614, the refrigerator 100 may output the high-load notification. The refrigerator 100 may output the high-load notification through the output interface 1420.

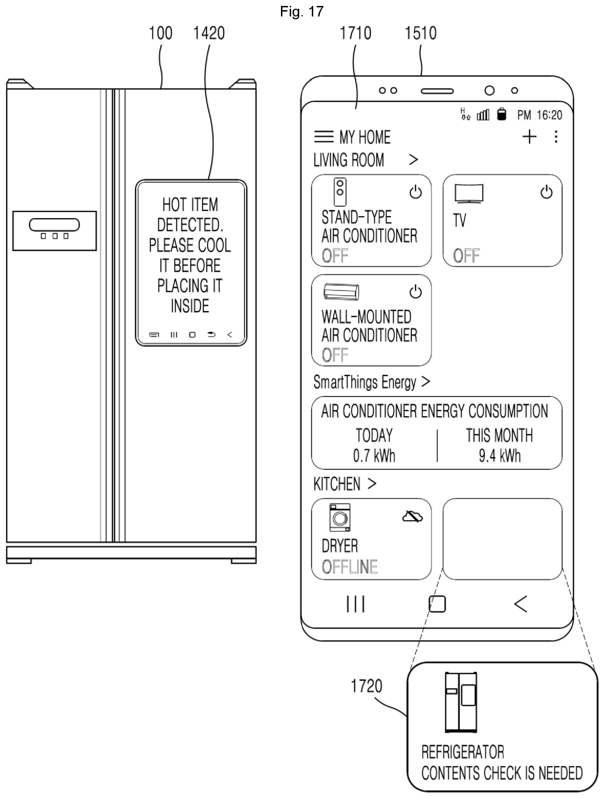

FIG. 17 is a diagram illustrating a process of outputting a high-load notification, according to an embodiment of the present disclosure.

According to an embodiment of the present disclosure, the refrigerator 100 may output, via the output interface 1420, a message indicating that a high load has been detected in the cooling compartment 214. For example, the refrigerator 100 may output a message, such as "Hot item detected. Please cool it before placing it inside.", through a display, which is the output interface 1420.

In addition, according to an embodiment of the present disclosure, the external device 1510 may output, through an output interface 1710, a message indicating that a high load has been detected in the refrigerator 100. The external device 1510 may correspond to a smartphone, a wearable device, or a tablet PC. The external device 1510 may output a high-load notification through a GUI of an application for controlling the refrigerator 100. For example, the external device 1510 may output, through the output interface 1710, in a GUI object 1720 corresponding to the refrigerator 100, a high-load notification message indicating that a high load has been detected in the refrigerator 100, and thus stored contents need to be checked.

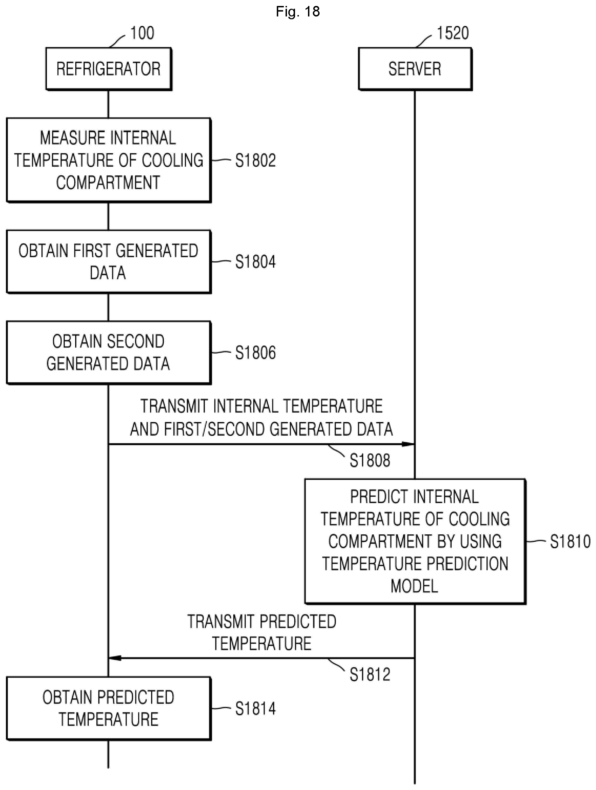

FIG. 18 is a diagram illustrating a process of predicting an internal temperature of a refrigerator by using an AI model provided in a server, according to an embodiment of the present disclosure.

According to an embodiment of the present disclosure, the temperature prediction model 120 may be provided in the server 1520, and the refrigerator 100 may predict an internal temperature by using the temperature prediction model of the server 1520.

In operation S1802, the refrigerator 100 measures an internal temperature of the cooling compartment 214. Next, the refrigerator 100 obtains first generated data in operation S1804, and obtains second generated data in operation S1806. Operations S1802, S1804, and S1806 respectively correspond to operations S502, S504, and S506 described above with reference to FIG. 5.

Next, in operation S1808, the refrigerator 100 transmits the measured internal temperature, the first generated data, and the second generated data to the server 1520. The refrigerator 100 may transmit the measured internal temperature, the first generated data, and the second generated data to the server 1520 via the communication module 1410.

In operation S1810, the server 1520 predicts the internal temperature of the cooling compartment 214 by inputting the internal temperature, the first generated data, and the second generated data received from the refrigerator 100 into the temperature prediction model 120. The temperature prediction model 120 may operate in the same manner as in the embodiment of FIG. 12 or the embodiment of FIG. 13 described above.

In operation S1812, the server 1520 may transmit the predicted internal temperature to the refrigerator 100. In operation S1814, the refrigerator 100 may obtain a predicted value of the internal temperature by using the predicted temperature received from the server 1520.

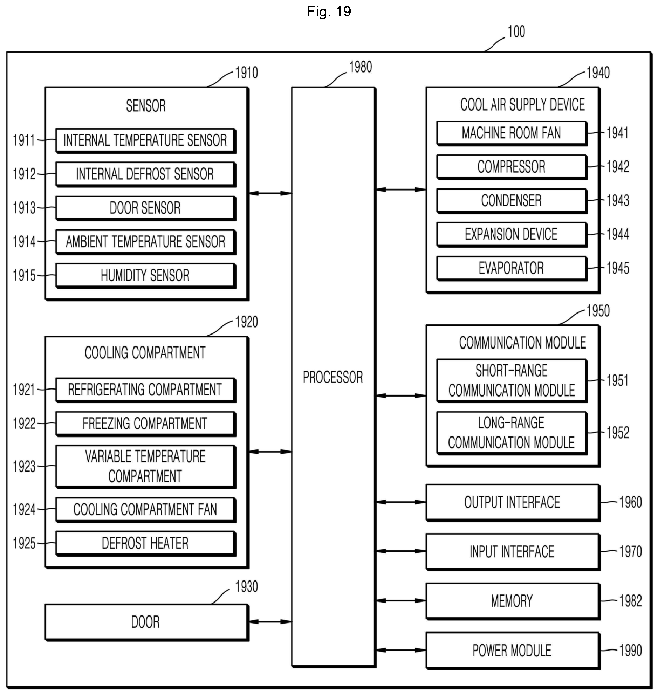

FIG. 19 is a block diagram illustrating a structure of a refrigerator according to an embodiment of the present disclosure.

According to an embodiment of the present disclosure, the refrigerator 100 includes a sensor 1910, a cooling compartment 1920, a door 1930, a cold air supply device 1940, a communication module 1950, an output interface 1960, an input interface 1970, a processor 1980, a memory 1982, and a power module 1990. The refrigerator 100 may be configured as various combinations of the components illustrated in FIG. 19, and not all of the components illustrated in FIG. 19 are essential.

An internal temperature sensor 1911 of FIG. 19 may correspond to the cooling compartment temperature sensor 216. The cooling compartment 1920 of FIG. 19 may correspond to the cooling compartment 214. The communication module 1950 of FIG. 19 may correspond to the communication module 1410. The output interface 1960 of FIG. 19 may correspond to the output interface 1420. The processor 1980 of FIG. 19 may correspond to the processor 210. The memory 1982 of FIG. 19 may correspond to the memory 212.

The sensor 1910 may include the internal temperature sensor 1911 for measuring a temperature inside the cooling compartment 1920, an internal defrost sensor 1912 for detecting a defrost state inside the cooling compartment 1920, a door sensor 1913 for detecting opening and closing of a door 1930, an ambient temperature sensor 1914 for measuring an ambient temperature of the refrigerator 100, and a humidity sensor 1915 for measuring humidity outside the refrigerator 100.

The cooling compartment 1920 may include at least one of a refrigerating compartment 1921, a freezing compartment 1922, or a variable temperature compartment 1923. In addition, the cooling compartment 1920 may include a cooling compartment fan 1924 for circulating air inside the cooling compartment 1920, and a defrost heater 1925 for supplying heat for defrosting within the cooling compartment 1920.

The door 1930 may be provided to be openable and closable so as to open or seal each cooling compartment 1920.

The cold air supply device 1940 may include a machine room fan 1941 for circulating air for cooling a machine room, a compressor 1942, a condenser 1943, an expansion device 1944, and an evaporator 1945.

The communication module 1950 may include a short-range communication module 1951 and a long-range communication module 1952.

The short-range communication module 1951 may include, but is not limited to, a Bluetooth communication module, a BLE communication module, an NFC communication module, a WLAN (or Wi-Fi) communication module, a ZigBee communication module, an IrDA communication module, a WFD communication module, a UWB communication module, an Ant+ communication module, a microwave (µWave) communication module, and the like.

The long-range communication module 1952 may include a communication module for performing various types of long-range communications, and include a mobile communication unit. The mobile communication unit transmits or receives wireless signals to or from at least one of a base station, an external terminal, or a server over a mobile communication network. The wireless signals may include voice call signals, video call signals, or various forms of data associated with transmission and reception of text/multimedia messages.

The output interface 1960 may include a display, a speaker, etc. The output interface 1960 may output various notifications, messages, information, etc., generated by the processor 1980.

The input interface 1970 may include a key, a touchscreen, a touch pad, a touch sensor, etc. The input interface 1970 may receive a user input and transmit the user input to the processor 1980.

The processor 1980 controls all operations of the refrigerator 100. The processor 1980 may execute a program stored in the memory 1982 to control components of the refrigerator 100.

According to an embodiment of the present disclosure, the processor 1980 may include a separate NPU for performing operations of an AI model. In addition, the processor 1980 may include a CPU, a GPU, etc.

The memory 1982 stores various pieces of information, data, instructions, programs, etc. necessary for the operation of the refrigerator 100. The memory 1982 may include at least one of volatile memory or non-volatile memory, or a combination thereof. The memory 1982 may include at least one type of storage medium selected from among a flash memory-type memory, a hard disk-type memory, a multimedia card micro-type memory, a card-type memory (e.g., a Secure Digital (SD) or eXtreme Digital (xD) memory), RAM, static RAM (SRAM), ROM, electrically erasable programmable ROM (EEPROM), PROM, magnetic memory, a magnetic disk, and an optical disk. In addition, the refrigerator 100 may interwork with a web storage or cloud server that performs a storage function on the Internet.

The power module 1990 may receive power from an external power source and supply the power to each component of the refrigerator 100.

A machine-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment of the disclosure, methods according to the embodiments of the disclosure may be included in a computer program product when provided. The computer program product may be traded as a product between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the computer-readable storage medium such as a memory of a server of a manufacturer, a server of an application store, or a relay server.

According to an aspect of an embodiment of the present disclosure, a method of controlling a refrigerator is provided. The method of controlling a refrigerator may include measuring an internal temperature of a cooling compartment, obtaining first generated data representing a specific heat capacity of the cooling compartment, obtaining second generated data representing a usage pattern of a user, and predicting an internal temperature of the cooling compartment after a reference time by using an AI model trained to receive input data including the measured internal temperature and output a predicted temperature, together with the first generated data and the second generated data.

Furthermore, according to an embodiment of the present disclosure, the obtaining of the first generated data may include measuring, during a cooling operation for cooling the cooling compartment, a value of internal temperature change of the cooling compartment between a previous cooling end time and a cooling start time, and defining, as the first generated data, a value obtained by dividing the value of the internal temperature change of the cooling compartment between the previous cooling end time and the cooling start time by a time difference between the previous cooling end time and the cooling start time.

Furthermore, according to an embodiment of the present disclosure, the obtaining of the first generated data may include measuring, during a cooling operation of the cooling compartment, a value of internal temperature change between a previous cooling end time and a cooling start time, using, when the value of the internal temperature change between the previous cooling end time and the cooling start time is less than or equal to a first remeasurement reference value, previously defined first generated data, as the first generated data, and when the value of the internal temperature change between the previous cooling end time and the cooling start time exceeds the first remeasurement reference value, redefining, as the first generated data, a value obtained by dividing the value of the internal temperature change between the previous cooling end time and the cooling start time by a time difference between the previous cooling end time and the cooling start time.

Furthermore, according to an embodiment of the present disclosure, the second generated data may include first sub-generated data, and the obtaining of the second generated data may include measuring, during a user action measurement period, a door opening duration and a value of internal temperature change caused by door opening, and defining, as the first sub-generated data, a value obtained by dividing a product of the door opening duration and the value of the internal temperature change caused by the door opening by a duration of the user action measurement period.

Furthermore, according to an embodiment of the present disclosure, the second generated data may include first sub-generated data, and the obtaining of the second generated data may include measuring, during a user action measurement period, a number of door openings per reference time, a door opening duration, and a value of internal temperature change caused by door opening, determining whether the measured number of door openings per reference time is less than or equal to a maximum number of door openings per reference time, when the measured number of door openings per reference time is less than or equal to the maximum number of door openings per reference time, determining whether a temperature difference per reference time is less than or equal to a second remeasurement reference value, when the temperature difference per reference time is less than or equal to the second remeasurement reference value, using, as the first sub-generated data, previously defined first sub-generated data, when the measured number of door openings per reference time exceeds the maximum number of door openings per reference time, updating the maximum number of door openings per reference time to the measured number of door openings per reference time and redefining, as the first sub-generated data, a value obtained by dividing a product of the door opening duration and the value of the internal temperature change caused by the door opening by a duration of the user action measurement period, and when the temperature difference per reference time exceeds the second remeasurement reference value, redefining, as the first sub-generated data, a value obtained by dividing a product of the door opening duration and the value of the internal temperature change caused by the door opening by the duration of the user action measurement period.

Furthermore, according to an embodiment of the present disclosure, the second generated data may include second sub-generated data, and the obtaining of the second generated data may include measuring, during a user action measurement period, a door opening duration, a value of internal temperature change caused by door opening, and an ambient temperature, and defining, as the second sub-generated data, a value obtained by dividing a product of the door opening duration, the value of the internal temperature change caused by the door opening, and the ambient temperature by a duration of the user action measurement period.

Furthermore, according to an embodiment of the present disclosure, the second generated data may include second sub-generated data, and the obtaining of the second generated data may include measuring, during a user action measurement period, a number of door openings per reference time, a door opening duration, a value of internal temperature change caused by door opening, and an ambient temperature, determining whether the measured door opening duration is less than or equal to a maximum door opening duration per reference time, when the measured door opening duration exceeds the maximum door opening duration per reference time, updating the maximum door opening duration per reference time and redefining, as the second sub-generated data, a value obtained by dividing a product of the door opening duration, the value of the internal temperature change caused by the door opening, and the ambient temperature by a duration of the user action measurement period, and when the measured door opening duration is less than or equal to the maximum door opening duration per reference time, using previously defined second sub-generated data as the second sub-generated data.

Furthermore, according to an embodiment of the present disclosure, the second generated data may include third sub-generated data, and the obtaining of the second generated data may include measuring, during a user action measurement period, for each of at least one door opening event, a door opening duration and a value of internal temperature change caused by door opening, and defining, as the third sub-generated data, a value obtained by dividing a sum of products of the door opening duration and the value of the internal temperature change caused by the door opening for each of the at least one door opening event by a duration of the user action measurement period.

Furthermore, according to an embodiment of the present disclosure, the obtaining of the second generated data may further include updating the third sub-generated data at intervals of the user action measurement period.

Furthermore, according to an embodiment of the present disclosure, the predicting of the internal temperature of the cooling compartment may include inputting the measured internal temperature, the first generated data, and the second generated data to the AI model, and obtaining the predicted internal temperature output from the AI model.

Furthermore, according to an embodiment of the present disclosure, the predicting of the internal temperature of the cooling compartment may include obtaining a model prediction value from the AI model, and obtaining the predicted internal temperature by post-processing the model prediction value using the first generated data and the second generated data.

Furthermore, according to an embodiment of the present disclosure, the method may further include comparing the predicted internal temperature with an internal temperature measured at a time corresponding to the predicted internal temperature, and re-obtaining at least one of the first generated data or the second generated data when an error value between the predicted internal temperature and the measured internal temperature is greater than or equal to a reference error value.

Furthermore, according to an embodiment of the present disclosure, the refrigerator may include at least one cooling compartment for which a target cooling temperature is individually set, and the obtaining of the first generated data, the obtaining of the second generated data, the measuring of the internal temperature, and the predicting of the internal temperature may be performed individually for each of the at least one cooling compartment.

Furthermore, according to an embodiment of the present disclosure, the input data may further include at least one of a cooling compartment temperature sensor value, a cooling compartment defrost sensor value, an ambient temperature sensor value, a cooling compartment humidity sensor value, a compressor revolutions per minute (RPM) value, a main compressor target RPM value, a maximum cooling compartment fan speed, a minimum cooling compartment fan speed, whether a cooling compartment defrost heater is turned on, a maximum machine room fan speed, a minimum machine room fan speed, whether refrigerant flows through the cooling compartment, a cooling compartment target temperature, or a number of cooling compartment door openings.

Furthermore, according to an embodiment of the present disclosure, the method may further include generating a high-load notification based on the second generated data, and outputting the high-load notification through the refrigerator or an external device.

Furthermore, according to an embodiment of the present disclosure, the AI model may be executed by a server, and the predicting of the internal temperature may further include transmitting the first generated data, the second generated data, and the measured internal temperature to the server, and receiving the predicted internal temperature from the server.

Furthermore, according to an aspect of an embodiment of the present disclosure, a refrigerator is provided. The refrigerator may include at least one cooling compartment, a cooling compartment temperature sensor configured to measure an internal temperature of the cooling compartment, memory storing at least one instruction, and at least one processor. The at least one processor may be configured to execute the at least one instruction to obtain first generated data representing a specific heat capacity of the cooling compartment, obtain second generated data representing a usage pattern of a user, and predict an internal temperature of the cooling compartment after a reference time by using an AI model trained to receive input data including the measured internal temperature and output a predicted temperature, the first generated data, and the second generated data.

Furthermore, according to an embodiment of the present disclosure, the at least one processor may be configured to execute the at least one instruction to measure, during a cooling operation for cooling the cooling compartment, a value of internal temperature change of the cooling compartment between a previous cooling end time and a cooling start time, and define, as the first generated data, a value obtained by dividing the value of the internal temperature change of the cooling compartment between the previous cooling end time and the cooling start time by a time difference between the previous cooling end time and the cooling start time.

Furthermore, according to an embodiment of the present disclosure, the refrigerator may further include a door arranged to seal the at least one cooling compartment and configured to be openable and closable, the second generated data may include first sub-generated data, and the at least one processor may be configured to execute the at least one instruction to measure, during a user action measurement period, a door opening duration, which is a time during which the door is open, and a value of internal temperature change caused by opening of the door, and define, as the first sub-generated data, a value obtained by dividing a product of the door opening duration and the value of the internal temperature change caused by the door opening by a duration of the user action measurement period.

Furthermore, according to an aspect of an embodiment of the present disclosure, there is provided a computer-readable recording medium having recorded thereon a program for performing, on a computer, a method of controlling a refrigerator.

## Claims

1. A method of controlling a refrigerator, the method comprising:
measuring an internal temperature of a cooling compartment;
obtaining first generated data representing a specific heat capacity of the cooling compartment;
obtaining second generated data representing a usage pattern of a user; and
predicting an internal temperature of the cooling compartment after a reference time by using an artificial intelligence (AI) model trained to receive input data including the measured internal temperature and output a predicted temperature, the first generated data, and the second generated data.

2. The method of claim 1, wherein
the obtaining of the first generated data comprises:
measuring, during a cooling operation for cooling the cooling compartment, a value of internal temperature change of the cooling compartment between a previous cooling end time and a cooling start time; and
defining, as the first generated data, a value obtained by dividing the value of the internal temperature change of the cooling compartment between the previous cooling end time and the cooling start time by a time difference between the previous cooling end time and the cooling start time.

3. The method of claim 1 or 2, wherein
the obtaining of the first generated data comprises:
measuring, during a cooling operation of the cooling compartment, a value of internal temperature change between a previous cooling end time and a cooling start time;
when the value of the internal temperature change between the previous cooling end time and the cooling start time is less than or equal to a first remeasurement reference value, using, as the first generated data, previously defined first generated data ; and
when the value of the internal temperature change between the previous cooling end time and the cooling start time exceeds the first remeasurement reference value, redefining, as the first generated data, a value obtained by dividing the value of the internal temperature change between the previous cooling end time and the cooling start time by a time difference between the previous cooling end time and the cooling start time.

4. The method of any one of claims 1 to 3, wherein
the second generated data includes first sub-generated data, and
the obtaining of the second generated data comprises:
measuring, during a user action measurement period, a duration of door opening and a value of internal temperature change caused by the door opening; and
defining, as the first sub-generated data, a value obtained by dividing a product of the duration of the door opening and the value of the internal temperature change caused by the door opening by a duration of the user action measurement period.

5. The method of any one of claims 1 to 4, wherein
the second generated data includes first sub-generated data, and
the obtaining of the second generated data comprises:
measuring, during a user action measurement period, a number of door openings per reference time, a duration of door opening, and a value of internal temperature change caused by the door opening;
determining whether the measured number of door openings per reference time is less than or equal to a maximum number of door openings per reference time;
when the measured number of door openings per reference time is less than or equal to the maximum number of door openings per reference time, determining whether a temperature difference per reference time is less than or equal to a second remeasurement reference value;
when the temperature difference per reference time is less than or equal to the second remeasurement reference value, using, as the first sub-generated data, previously defined first sub-generated data;
when the measured number of door openings per reference time exceeds the maximum number of door openings per reference time, updating the maximum number of door openings per reference time to the measured number of door openings per reference time and redefining, as the first sub-generated data, a value obtained by dividing a product of the duration of the door opening and the value of the internal temperature change caused by the door opening by a duration of the user action measurement period; and
when the temperature difference per reference time exceeds the second remeasurement reference value, redefining, as the first sub-generated data, a value obtained by dividing a product of the duration of the door opening and the value of the internal temperature change caused by the door opening by the duration of the user action measurement period.

6. The method of any one of claims 1 to 5, wherein
the second generated data includes second sub-generated data, and
the obtaining of the second generated data comprises:
measuring, during a user action measurement period, a duration of door opening, a value of internal temperature change caused by the door opening, and an ambient temperature; and
defining, as the second sub-generated data, a value obtained by dividing a product of the duration of the door opening, the value of the internal temperature change caused by the door opening, and the ambient temperature by a duration of the user action measurement period.

7. The method of any one of claims 1 to 6, wherein
the second generated data includes second sub-generated data, and
the obtaining of the second generated data comprises:
measuring, during a user action measurement period, a number of door openings per reference time, a duration of door opening, a value of internal temperature change caused by the door opening, and an ambient temperature;
determining whether the measured duration of the door opening is less than or equal to a maximum door opening duration per reference time;
when the measured duration of the door opening exceeds the maximum door opening duration per reference time, updating the maximum door opening duration per reference time and redefining, as the second sub-generated data, a value obtained by dividing a product of the duration of the door opening, the value of the internal temperature change caused by the door opening, and the ambient temperature by a duration of the user action measurement period; and
when the measured duration of the door opening is less than or equal to the maximum door opening duration per reference time, using, as the second sub-generated data, previously defined second sub-generated data.

8. The method of any one of claims 1 to 7, wherein
the second generated data includes third sub-generated data, and
the obtaining of the second generated data comprises:
measuring, during a user action measurement period, for each of at least one door opening event, a duration of door opening and a value of internal temperature change caused by the door opening; and
defining, as the third sub-generated data, a value obtained by dividing a sum of products of the duration of the door opening and the value of the internal temperature change caused by the door opening for each of the at least one door opening event by a duration of the user action measurement period.

9. The method of any one of claims 1 to 8, wherein the predicting of the internal temperature of the cooling compartment comprises inputting the measured internal temperature, the first generated data, and the second generated data to the AI model, and obtaining the predicted internal temperature output from the AI model.

10. The method of any one of claims 1 to 9, wherein
the predicting of the internal temperature of the cooling compartment comprises:
obtaining a model prediction value from the AI model; and
obtaining the predicted internal temperature by post-processing the model prediction value using the first generated data and the second generated data.

11. The method of any one of claims 1 to 10, further comprising:
comparing the predicted internal temperature with an internal temperature measured at a time corresponding to the predicted internal temperature; and
when an error value between the predicted internal temperature and the measured internal temperature is greater than or equal to a reference error value, re-obtaining at least one of the first generated data or the second generated data.

12. The method of any one of claims 1 to 11, further comprising:
the refrigerator includes at least one cooling compartment for which a target cooling temperature is individually set, and
the obtaining of the first generated data, the obtaining of the second generated data, the measuring of the internal temperature, and the predicting of the internal temperature are performed individually for each of the at least one cooling compartment.

13. The method of any one of claims 1 to 12, wherein the input data further comprises at least one of a cooling compartment temperature sensor value, a cooling compartment defrost sensor value, an ambient temperature sensor value, a cooling compartment humidity sensor value, a compressor revolutions per minute (RPM) value, a main compressor target RPM value, a maximum cooling compartment fan speed, a minimum cooling compartment fan speed, whether a cooling compartment defrost heater is turned on, a maximum machine room fan speed, a minimum machine room fan speed, whether refrigerant flows through the cooling compartment, a cooling compartment target temperature, or a number of cooling compartment door openings.

14. A refrigerator (100) comprising:
at least one cooling compartment (214);
a cooling compartment temperature sensor (216) configured to measure an internal temperature of the at least one compartment (214);
memory (212) storing at least one instruction; and
at least one processor (210), wherein the at least one processor (210) is configured to execute the at least one instruction to
obtain first generated data representing a specific heat capacity of the at least one cooling compartment (214),
obtain second generated data representing a usage pattern of a user, and
predict an internal temperature of the at least one cooling compartment (214) after a reference time by using an artificial intelligence model (1210, 1310) trained to receive input data including the measured internal temperature and output a predicted temperature, the first generated data, and the second generated data.

15. A computer-readable recording medium having recorded thereon a program for performing the method of claim 14 on a computer.
